# EUROPEAN PATENT APPLICATION

(11) **EP 4 841 437 A1**
(43) Date of publication of application: **18.11.2026**
(21) Application number: 24919727.8
(22) Date of filing: 09.09.2024
(51) Int. Cl.: G06F 9/451

(54) **METHOD AND APPARATUS FOR DISPLAYING VISUAL DATA OBJECT**

(30) Priority: 22.01.2024 CN 202410087566
(71) Applicant: Huawei Technologies Co., Ltd., Shenzhen, Guangdong 518129 (CN)
(72) Inventor: TANG, Wenfang, Shenzhen, Guangdong 518129 (CN); WU, Jiangzhou, Shenzhen, Guangdong 518129 (CN); HUANG, Zengjun, Shenzhen, Guangdong 518129 (CN)
(74) Representative: Huawei European IPR
(86) International application number: PCT/CN2024/117766
(87) International publication number: WO 2025/156647

(57) **Abstract**

This application discloses a method and an apparatus for displaying a visualized data object. The method includes: determining a first visualized data object from at least one visualized data object included in a first user interface; performing display conversion on the first visualized data object based on a transformation type obtained from a second user interface, to obtain a second visualized data object, where a display style of the second visualized data object matches the transformation type; and displaying the second visualized data object. According to the method for displaying a visualized data object provided in this application, the visualized data object can be conveniently and quickly transformed, and the visualized data object can be flexibly displayed as required.

## Description

This application claims priority to Chinese Patent Application No. 202410087566.6, filed on January 22, 2024 and entitled "METHOD AND APPARATUS FOR DISPLAYING VISUALIZED DATA OBJECT", which is incorporated herein by reference in its entirety.

### TECHNICAL FIELD

This application relates to the field of communication technologies, and in particular, to a method and an apparatus for displaying a visualized data object.

### BACKGROUND

Currently, users encounter various visualized data objects such as histograms, column charts, line charts, bar charts, pie charts, doughnut charts, and area charts during learning and work. However, sometimes these visualized data objects fail to well present data features, and consequently cannot meet user requirements. In addition, re-making the visualized data objects to meet the requirements is a highly complex process. Therefore, how to conveniently and quickly implement display transformation of the visualized data objects becomes an urgent problem to be resolved currently.

### SUMMARY

This application provides a method and an apparatus for displaying a visualized data object, to conveniently and quickly implement display transformation of the visualized data object. The technical solutions are described below.

According to a first aspect, a method for displaying a visualized data object is provided. The method includes: determining a first visualized data object from at least one visualized data object included in a first user interface; performing display conversion on the first visualized data object based on a transformation type obtained from a second user interface, to obtain a second visualized data object, where a display style of the second visualized data object matches the transformation type; and displaying the second visualized data object.

The first user interface may be a client interface of a first application that includes the at least one visualized data object. The first application may be a standalone application constructed by using the method, or may be a non-standalone application on which a plug-in constructed by using the method is installed.

A visualized data object is a chart that can intuitively show a trend or feature of a dataset, for example, a table, a histogram, a column chart, a line chart, a bar chart, a pie chart, a doughnut chart, an area chart, or a data map.

After the first visualized data object is determined, display conversion may be directly performed on the first visualized data object based on the transformation type obtained from the second user interface, and a user does not need to re-make a required visualized data object, so that the visualized data object can be flexibly type-transformed based on a user requirement, and work and learning efficiency of the user can be improved during actual application.

In a possible implementation, determining the first visualized data object from the at least one visualized data object included in the first user interface includes: in response to a movement operation triggered in the first user interface, determining a movement trajectory corresponding to the movement operation; determining an enclosed selection region based on the movement trajectory; and selecting the first visualized data object from the at least one visualized data object based on the enclosed selection region.

The movement trajectory may be an enclosed trajectory, or may not be an enclosed trajectory. If the movement trajectory is an enclosed trajectory, a selection region formed by the movement trajectory is determined as an enclosed selection region; or if the movement trajectory is not an enclosed trajectory, enclosed trajectory prediction is performed based on the movement trajectory, and a selection region formed by an enclosed trajectory obtained through prediction is used as an enclosed selection region.

In this way, the user can directly trigger the movement operation to lasso-select the desired visualized data object with simple operations. When the movement trajectory corresponding to the movement operation triggered by the user is not the enclosed trajectory, enclosed trajectory prediction may be performed according to the method, and no enclosed requirement is imposed on the movement trajectory, so that the user can have more comfortable interaction experience.

In a possible implementation, after determining the first visualized data object from the at least one visualized data object included in the first user interface, the method further includes: displaying a selection box of the first visualized data object.

The selected box is displayed, so that the selected visualized data object can be more prominent, and the user can intuitively view a location of the first visualized data object.

In a possible implementation, the second user interface includes a plurality of transformation options, and the method further includes: obtaining, based on the plurality of transformation options included in the second user interface, a target transformation option selected by the user; and using a type corresponding to the target transformation option as the transformation type obtained from the second user interface.

The plurality of transformation options indicate to change the display style of the visualized data object and may change the display style to a plurality of different styles. For example, the style of the visualized data object is changed to a line chart, a pie chart, a sector chart, or the like.

Because the second user interface includes the plurality of transformation options, the user may select, as required, a transformation option that meets a requirement from the plurality of transformation options, and conveniently and quickly express a change requirement for the style of the visualized data object by selecting the target transformation option. The target transformation option is selected, so that the user can easily complete an operation, and time of the user can be greatly saved during actual application.

In a possible implementation, before obtaining the target transformation option selected by the user, the method further includes: obtaining, based on a display style of the first visualized data object, the plurality of transformation options that match the display style of the first visualized data object, where the plurality of transformation options and the display style of the first visualized data object are output for display in a manner of a style conversion relationship.

The style conversion relationship usually includes styles between which a visualized data object can be converted to each other. In this way, after the first visualized data object is selected, styles to which the first visualized data object can be converted may be determined based on the current style of the first visualized data object and the style conversion relationship, and transformation options corresponding to these styles are used as the plurality of transformation options included in the second user interface.

In this case, a current transformation requirement of the first visualized data object is a style change, and the first visualized data object may include one visualized data object, or may include a plurality of visualized data objects. Current styles of the plurality of visualized data objects may be the same or may be different. When current styles of the plurality of visualized data objects are different, the plurality of transformation options may be an intersection of some candidate styles that can be transformed from the current styles of the plurality of visualized data objects.

In a possible implementation, the second user interface includes an input box, the input box indicates to describe a transformation type by using natural language, and the method further includes: obtaining, from the input box in the second user interface, a transformation type input by the user; and using the transformation type input by the user as the transformation type obtained from the second user interface. In this case, the transformation type obtained from the second user interface may be a style change, or may be content splitting or merging.

Because the second user interface includes the input box, the user may use the natural language in the input box to describe the required transformation type, and the user does not need to have professional knowledge. This can be easily completed for the user. In addition, because the natural language is used for description, even when a complex transformation type is encountered, the user can still flexibly express a change requirement for a style of a visualized data object.

In a possible implementation, the second user interface includes at least one predicted transformation option, and the method further includes: obtaining, based on the at least one predicted transformation option included in the second user interface, a target predicted transformation option selected by the user; and using a type corresponding to the target predicted transformation option as the transformation type obtained from the second user interface.

The predicted transformation option is obtained by predicting the transformation type. In this case, the transformation type obtained from the second user interface may be a style change, or may be content splitting or merging.

The predicted transformation option is obtained by predicting a transformation type that the user wants to select. When there is a transformation type that the user wants to select in the predicted transformation option, the user may directly use one of the at least one predicted transformation option as the target predicted transformation option, and does not need to describe a transformation requirement, thereby saving time.

The second user interface may include at least two of the transformation option, the input box, and the predicted transformation option, so that the user can express a selected transformation type in a plurality of manners, to express a transformation requirement for a selected visualized data object, which is easy to operate and improves efficiency.

In a possible implementation, the first visualized data object includes at least two visualized data objects, and the transformation type obtained from the second user interface indicates to perform content merging on the at least two visualized data objects; and performing display conversion on the first visualized data object based on the transformation type obtained from the second user interface, to obtain the second visualized data object includes: obtaining datasets respectively corresponding to the at least two visualized data objects; and performing content merging on the at least two visualized data objects based on the datasets corresponding to the at least two visualized data objects and the transformation type obtained from the second user interface, to obtain the second visualized data object.

When the transformation type obtained from the second user interface indicates to perform content merging on the at least two visualized data objects, the datasets respectively corresponding to the at least two visualized data objects are obtained, so that data content in the two datasets can be merged, and then a visualized data object is generated based on merged data content. In this way, content merging can be quickly performed on the selected visualized data objects, and a merging result is displayed, so that the user can quickly obtain the second visualized data object through content merging.

In a possible implementation, the first visualized data object includes one visualized data object, and the transformation type obtained from the second user interface indicates to perform content splitting on the one visualized data object; and performing display conversion on the first visualized data object based on the transformation type obtained from the second user interface, to obtain the second visualized data object includes: obtaining a dataset corresponding to the one visualized data object; and performing content splitting on the one visualized data object based on the dataset corresponding to the one visualized data object and the transformation type obtained from the second user interface, to obtain the second visualized data object.

When the transformation type obtained from the second user interface indicates to perform content splitting on the one visualized data object, the dataset corresponding to the one visualized data object is obtained, the dataset corresponding to the one visualized data object is split based on the transformation type, and then at least two visualized data objects are correspondingly generated based on data content obtained through splitting. In this way, content splitting can be quickly performed on the selected visualized data object, and a splitting result is displayed, so that the user can quickly obtain the second visualized data object through content splitting.

In a possible implementation, the transformation type obtained from the second user interface indicates to perform a style change on the first visualized data object; and performing display conversion on the first visualized data object based on the transformation type obtained from the second user interface, to obtain the second visualized data object includes: obtaining a dataset corresponding to the first visualized data object; performing the style change on the first visualized data object based on the dataset corresponding to the first visualized data object and the transformation type obtained from the second user interface, to obtain the second visualized data object.

When the transformation type obtained by the second user interface indicates to perform a style change on the first visualized data object, a dataset corresponding to the first visualized data object is obtained, and the second visualized data object is generated by using the dataset directly according to a corresponding style in the transformation type. In this way, a style change can be quickly performed on the selected visualized data object, and a result of the style change is displayed, so that the user quickly obtains the second visualized data object obtained through the style change.

During actual application, a combination of the foregoing transformation types often occurs. That is, the transformation type obtained from the second user interface usually includes at least two of content merging, content splitting, and a style change.

Display transformation is performed on the selected visualized data object based on different transformation types by using the style conversion relationship and the like, so that a transformation result can be obtained with a fast response, thereby helping improve work and learning efficiency of the user.

In a possible implementation, the first visualized data object indicates statistical data of a plurality of regions, the first visualized data object includes a plurality of pieces of markable information, the markable information indicates a statistical indicator of the statistical data, the display style of the second visualized data object is a data map, the data map includes marker icons corresponding to the plurality of pieces of markable information, and the second visualized data object and the first visualized data object are displayed simultaneously. The method further includes: obtaining, based on the plurality of pieces of markable information included in the first visualized data object, target markable information selected by the user; and on the data map, displaying, in a first display manner, a marker icon corresponding to the target markable information, and displaying, in a second display manner, a marker icon corresponding to markable information other than the target markable information.

The first display manner and the second display manner are two different display manners. For example, the first display manner is highlight display, and the second display manner is dimmed display. That is, the marker icon corresponding to the target markable information is displayed in a highlighted manner, and the marker icons corresponding to the remaining markable information is displayed in a dimmed manner. In other words, display brightness of the marker icon corresponding to the target markable information is high, and display brightness of the marker icon corresponding to the remaining markable information is low.

When the user selects one piece of markable information from the first visualized data object, a marker icon corresponding to the markable information and another marker icon are displayed in different display manners on the data map, so that the user can intuitively view a correspondence between each piece of markable information in the first visualized data object and a marker icon on the data map.

In a possible implementation, the first visualized data object indicates statistical data of a plurality of regions, the first visualized data object includes a plurality of pieces of markable information, the markable information indicates a statistical indicator of the statistical data, the display style of the second visualized data object is a data map, the data map includes marker icons corresponding to the plurality of pieces of markable information, and the second visualized data object and the first visualized data object are displayed simultaneously. The method further includes: obtaining, based on the marker icons included in the data map, a target marker icon selected by the user; and in the first visualized data object, displaying, in a first display manner, markable information corresponding to the target marker icon, and displaying, in a second display manner, markable information corresponding to a marker icon other than the target marker icon.

That is, the first visualized data object and the data map can realize two-way linkage, so that the user intuitively views a correspondence between each piece of markable information in the first visualized data object and a marker icon on the data map.

In a possible implementation, the method further includes: in response to a zoom operation performed on the data map, determining a display scale of the data map resulting from the zoom operation; and if the display scale is less than a scale threshold, aggregating and displaying, based on the dataset corresponding to the first visualized data object, the marker icons corresponding to the plurality of pieces of markable information on the data map by different regions; or if the display scale is not less than the scale threshold, expanding and displaying, based on the dataset corresponding to the first visualized data object, the marker icons corresponding to the plurality of pieces of markable information on the data map by different geographical locations in the plurality of regions.

That is, when the display style of the second visualized data object is the data map, the user may further view detailed data content or aggregate the data content through the zoom operation as required, so that the user can conveniently obtain detailed data information and aggregate data information as required.

In a possible implementation, displaying the second visualized data object includes: displaying the second visualized data object in the first user interface or a third user interface. That is, the second visualized data object and the first visualized data object may be displayed in a same interface, or may be displayed in different interfaces.

In conclusion, according to the method for displaying a visualized data object provided in this application, the visualized data object can be conveniently and quickly transformed, and the visualized data object can be flexibly displayed as required.

According to a second aspect, an apparatus for displaying a visualized data object is provided. The apparatus for displaying the visualized data object has a function of implementing behavior of the method for displaying a visualized data object in the first aspect. The apparatus for displaying the visualized data object includes at least one module, and the at least one module is configured to implement the method for displaying a visualized data object according to the first aspect.

According to a third aspect, a computer-readable storage medium is provided. The storage medium stores instructions, and when the instructions are run on a computer, the computer is enabled to perform steps of the method for displaying a visualized data object according to the first aspect.

According to a fourth aspect, a computer program product including instructions is provided. When the instructions are run on a computer, the computer is enabled to perform steps of the method for displaying a visualized data object according to the first aspect. In other words, a computer program is provided. When the computer program is run on a computer, the computer is enabled to perform steps of the method for displaying a visualized data object according to the first aspect.

Technical effects achieved in the second aspect, the third aspect, and the fourth aspect are similar to the technical effects achieved by corresponding technical means in the first aspect. Details are not described herein again.

### BRIEF DESCRIPTION OF DRAWINGS

FIG. 1 is a diagram of an implementation environment according to an embodiment of this application;
FIG. 2 is a diagram of a structure of a server according to an embodiment of this application;
FIG. 3 is a flowchart of a method for displaying a visualized data object according to an embodiment of this application;
FIG. 4 is a diagram of a movement trajectory according to an embodiment of this application;
FIG. 5 is a diagram of a threshold region of a visualized data object according to an embodiment of this application;
FIG. 6 is a diagram of selecting a first visualized data object according to an embodiment of this application;
FIG. 7 is a diagram of another threshold region of a visualized data object according to an embodiment of this application;
FIG. 8 is another diagram of selecting a first visualized data object according to an embodiment of this application;
FIG. 9 is a diagram of checking a visualized data object according to an embodiment of this application;
FIG. 10 is a diagram of displaying a selection box of a first visualized data object according to an embodiment of this application;
FIG. 11 is a diagram of a second user interface including a transformation menu according to an embodiment of this application;
FIG. 12 is a diagram of a second user interface including an input box according to an embodiment of this application;
FIG. 13 is a diagram of a second user interface including a predicted transformation option according to an embodiment of this application;
FIG. 14 is a diagram in which a user describes a transformation type in an input box according to an embodiment of this application;
FIG. 15 is a combo chart generated based on the transformation type described by the user in FIG. 14 according to an embodiment of this application;
FIG. 16 is another diagram in which a user describes a transformation type in an input box according to an embodiment of this application;
FIG. 17 is a sector chart generated based on the transformation type described by the user in FIG. 16 according to an embodiment of this application;
FIG. 18 is a diagram in which a user selects a target transformation option as a bubble chart according to an embodiment of this application;
FIG. 19 is a bubble chart generated based on the target transformation option selected by the user in FIG. 18 according to an embodiment of this application;
FIG. 20 is a diagram of a first user interface in which a user queries an alarm device in a session region according to an embodiment of this application;
FIG. 21 is another diagram of a first user interface in which a user queries an alarm device in a session region according to an embodiment of this application;
FIG. 22 is another diagram of a first user interface in which a user queries an alarm device in a session region according to an embodiment of this application;
FIG. 23 is a diagram of a first user interface in which a user queries a network SLA in a session region according to an embodiment of this application;
FIG. 24 is a diagram of a first user interface in which a user queries video conference quality in a session region according to an embodiment of this application; and
FIG. 25 is a diagram of a structure of an apparatus for displaying a visualized data object according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before a method for displaying a visualized data object provided in embodiments of this application is described in detail, an application scenario and an implementation environment in embodiments of this application are first described.

First, the application scenario in embodiments of this application is described.

A visualized data object can intuitively display data information. For example, an interval-based histogram can intuitively display distribution of data across different intervals, a sector chart can intuitively display proportions of different types of data, and a line chart can intuitively display fluctuation of data. Because of the advantage that the visualized data object can intuitively display data information, a user often needs to make a dataset into a visualized data object in various manners in work and life, for example, making a work analysis report. However, sometimes, the user may need to make one dataset into visualized data objects of a plurality of styles; sometimes, a visualized data object encountered by the user may fail to well display information that the user wants to intuitively display, and a visualized data object of another style needs to be re-made; sometimes, the user may need to integrate information in different visualized data objects; and sometimes, the user may need to split information in one visualized data object. In these cases, a process of making a visualized data object that meets a requirement may be complex.

In a related technology, a visualized data object of a style specified by a user may be quickly made based on a dataset. However, currently, it is currently impossible to implement and perform operations such as merging information of a plurality of visualized data objects for display, splitting a single visualized data object into a plurality of visualized data object for display, or quickly changing a form of a single visualized data object.

In view of this, embodiments of this application provide a method for displaying a visualized data object. According to a corresponding interaction operation mechanism, a transformation type expressed by a user in a plurality of manners such as option selection and natural language description can be quickly responded to, and a plurality of requirements of the user for information integration, splitting, and a style change on the visualized data object can be met, thereby improving display flexibility.

Then, the implementation environment in embodiments of this application is described.

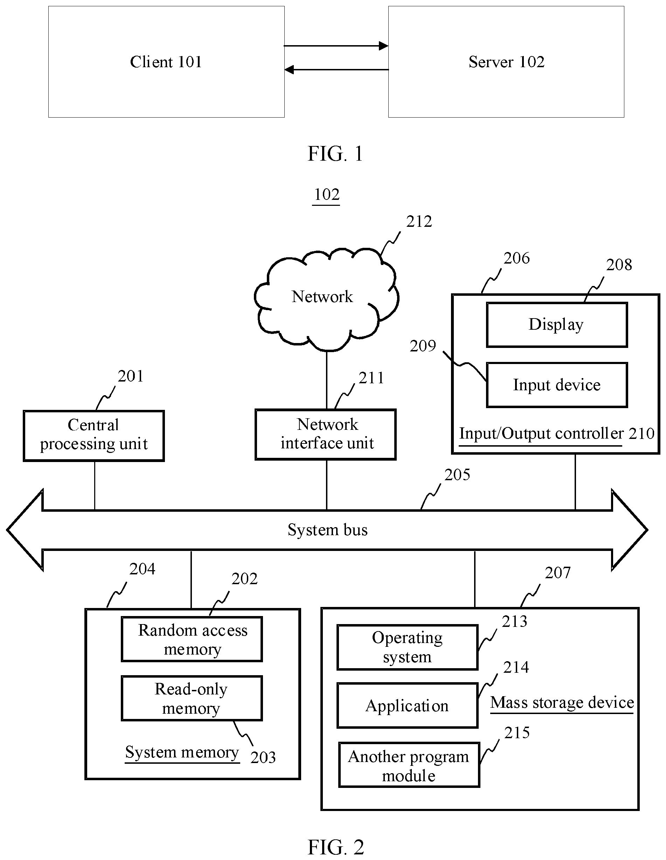

Refer to FIG. 1. FIG. 1 is a diagram of an implementation environment according to an embodiment of this application. The implementation environment includes a client 101. The client 101 is configured to: display a user interface, indicate a user to express a transformation type in a plurality of manners, identify a style of visualized data, perform display transformation on a visualized data object, and the like. In some embodiments, the implementation environment further includes a server 102, where the client 101 may communicate with the server 102. The communication may be wired communication or wireless communication. This is not limited in embodiments of this application. The server 102 is configured to: extract a dataset in the visualized data object, perform display transformation on the visualized data object based on the transformation type, predict the transformation type of the visualized data object, and the like.

The client 101 may be any electronic product that can perform human-machine interaction with a user in one or more manners such as a keyboard, a touchpad, a touchscreen, a remote control, a voice interaction device, or a handwriting device, for example, a personal computer (personal computer, PC), a mobile phone, a smartphone, a personal digital assistant (personal digital assistant, PDA), a wearable device, a palmtop computer, a tablet computer, a smart head unit, a smart television, or a smart sound box.

The server 102 may be an independent server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform, or may be a cloud computing service center.

Refer to FIG. 2. FIG. 2 is a diagram of a structure of a server according to an embodiment of this application. The server 102 includes a central processing unit (central processing unit, CPU) 201, a system memory 204 including a random access memory (random access memory, RAM) 202 and a read-only memory (read-only memory, ROM) 203, and a system bus 205 connecting the system memory 204 and the central processing unit 201. The server 102 further includes a basic input/output (input/output, I/O) system 206 that helps transmit information between components in a computer, and a mass storage device 207 configured to store an operating system 213, an application 214, and another program module 215.

The basic input/output system 206 includes a display 208 configured to display information and an input device 209, like a mouse or a keyboard, used by a user to input information. The display 208 and the input device 209 are connected to the central processing unit 201 through an input/output controller 210 connected to the system bus 205. The basic input/output system 206 may further include the input/output controller 210, configured to receive and process input from a plurality of other devices, for example, a keyboard, a mouse, or an electronic stylus. Similarly, the input/output controller 210 further provides output to a display, a printer, or another type of output device.

The mass storage device 207 is connected to the central processing unit 201 through a mass storage controller (not shown) connected to the system bus 205. The mass storage device 207 and a computer-readable medium associated with the mass storage device 207 provide nonvolatile storage for the server 102. That is, the mass storage device 207 may include a computer-readable medium (not shown) like a hard disk or a compact disc read-only memory (compact disc read-only memory, CD-ROM) drive.

The computer-readable medium may include a computer storage medium and a communication medium. The computer storage medium includes volatile, nonvolatile, movable, and unmovable media that are configured to store information such as a computer-readable instruction, a data structure, a program module, or other data and that is implemented by using any method or technology. The computer storage medium includes a RAM, a ROM, an electrically erasable programmable read-only memory (electrically erasable programmable read-only memory, EEPROM), an erasable programmable read-only memory (erasable programmable read-only memory, EPROM), a flash memory or another solid-state storage technology, a CD-ROM, a digital video disc (digital video disc, DVD) or other optical storage, a cassette, a magnetic tape, magnetic disk storage, or another magnetic storage device. Certainly, a person skilled in the art may know that the computer storage medium is not limited to the foregoing several types. The system memory 204 and the mass storage device 207 may be collectively referred to as a memory. According to various embodiments of this application, the server 102 may alternatively be connected to a remote computer on a network through a network like the Internet. That is, the server 102 may be connected to a network 212 through a network interface unit 211 connected to the system bus 205, or may be connected to a network of other types or a remote computer (not shown) by using a network interface unit 211.

The memory further includes one or more programs. The one or more programs are stored in the memory and configured to be executed by the CPU.

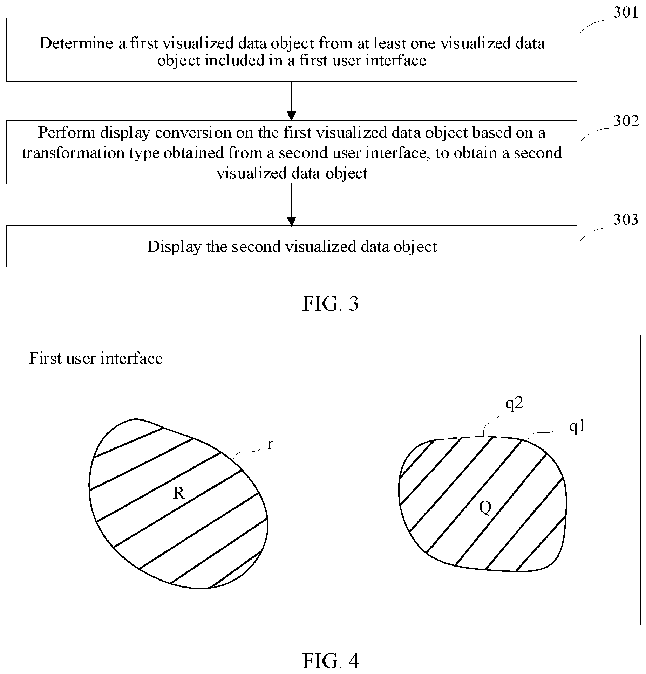

FIG. 3 is a flowchart of a method for displaying a visualized data object according to an embodiment of this application. The method may be applied to the client in the foregoing implementation environment. With reference to FIG. 3, the method includes the following steps.

**Step 301:** Determine a first visualized data object from at least one visualized data object included in a first user interface.

The first user interface may be a client interface of a first application that includes the at least one visualized data object. The first application may be a standalone application constructed by using the method, or may be a non-standalone application on which a plug-in constructed by using the method is installed. This is not limited in embodiments of this application. A visualized data object is a chart that can intuitively show a trend or feature of a dataset, for example, a table, a histogram, a column chart, a line chart, a bar chart, a pie chart, a doughnut chart, an area chart, or a data map.

In some embodiments, the at least one visualized data object is generated by the first application based on a first dataset. The first application can obtain a dataset and a display style that correspond to the at least one visualized data object. The first dataset may be a dataset obtained by the first application from a user. For example, the user imports the dataset into the first application, or the user inputs the dataset into the first application in a dialog manner. Alternatively, the first dataset may be a dataset obtained by the first application from a server. Alternatively, the first dataset may be a dataset obtained in another manner. This is not limited in embodiments of this application.

In some other embodiments, the at least one visualized data object is not generated by the first application. In this case, the first application cannot directly learn of the dataset and the display style that correspond to the at least one visualized data object. For example, a page of report is imported into the first application, and the report includes the at least one visualized data object. In this case, the first application does not know the dataset and the display style that correspond to the at least one visualized data object. In this case, if the dataset and the display style that correspond to the at least one visualized data object need to be obtained, the server needs to analyze, by using an image recognition technology, the dataset and the display style that correspond to the visualized data object.

In some embodiments, determining the first visualized data object from the at least one visualized data object included in the first user interface includes the following steps (1) to (3).
(1) In response to a movement operation triggered in the first user interface, determine a movement trajectory corresponding to the movement operation.

In some embodiments, if the client detects a press-down start event in the first user interface, the client records a press-down start location. If the client detects a movement event in the first user interface after the press-down start event, the client records a location in a movement process. If the client detects a press-down end event in the first user interface after the movement event, the client records a press-down end location. Then, the movement trajectory is generated based on the press-down start location, locations in the movement process, and the press-down end location.

The press-down start event, the movement event, and the press-down end event may be determined by the client by detecting corresponding trigger operations in the first user interface. These trigger operations may be triggered by the user with a mouse or a finger. Certainly, during actual application, the trigger operations may be triggered in another manner. This is not limited in embodiments of this application.

For example, in the first user interface, if the client detects that a right button of the mouse is pressed down on a screen, the client determines that the press-down start event is detected, and records a location corresponding to the press-down start event in the first user interface, to obtain the press-down start location. If the client detects that the right button of the mouse is pressed down and moved on the screen, the client determines that the press-down and movement event is detected, and records the location in the movement process. If the client detects that press-down on the right button of the mouse ends on the screen, the client determines that the press-down end event is detected, and records the press-down end location. These locations form the movement trajectory.

In some embodiments, if the first application is the non-standalone application on which the plug-in constructed by using the method is installed, when it is detected that a first function is enabled, the movement trajectory corresponding to the movement operation is determined in response to the movement operation triggered by the user in the first user interface. The first function is a function corresponding to the method provided in embodiments of this application.

In some embodiments, after the movement trajectory is determined, the movement trajectory may be displayed in the first user interface. The movement trajectory may be a complete trajectory generated after the movement operation ends. Certainly, the movement trajectory may alternatively be a partial trajectory generated in a process of triggering the movement operation. If the movement trajectory is a complete trajectory generated after the movement operation ends, the complete trajectory may be directly displayed in the first user interface after the movement operation ends, and the movement trajectory is not displayed in the movement process. If the movement trajectory is a partial trajectory generated in a process of triggering the movement operation, the movement trajectory is displayed in the first user interface with a location of the movement operation in the process of triggering the movement operation.

(2) Determine an enclosed selection region based on the movement trajectory.

The movement trajectory may be an enclosed trajectory, or may not be an enclosed trajectory. If the movement trajectory is an enclosed trajectory, a selection region formed by the movement trajectory is determined as the enclosed selection region; or if the movement trajectory is not an enclosed trajectory, enclosed trajectory prediction is performed based on the movement trajectory, and a selection region formed by an enclosed trajectory obtained through prediction is used as the enclosed selection region.

When the movement trajectory is the enclosed trajectory, a region within the movement trajectory is the enclosed selection region. When the movement trajectory is not the enclosed trajectory, no enclosed selection region can be determined based on the movement trajectory. In this case, prediction needs to be performed based on a movement trend of the movement trajectory, to obtain an enclosed trajectory through prediction, and then a region within the enclosed trajectory is determined as the enclosed selection region.

In some embodiments, if the movement trajectory is not the enclosed trajectory, after enclosed trajectory prediction is performed based on the movement trajectory, the enclosed trajectory obtained through prediction may be further displayed in the first user interface. In this way, the user can intuitively view the predicted enclosed trajectory, thereby enhancing a sense of interaction of the user.

When the enclosed trajectory prediction is performed based on the movement trajectory, the prediction may be performed according to a data-driven method. For example, the prediction is performed by using an autoregressive integrated moving average model, a hidden Markov model, a Gaussian mixture model, a Bayesian network, or the like; or the prediction may be performed according to a curve fitting method, for example, a least squares curve fitting algorithm; or the prediction may be performed according to another method. This is not limited in embodiments of this application.

For example, the press-down start location is used as a target point, the press-down end location and a movement location closest to the press-down end location are used as sampling points, and a partial trajectory curve is fitted according to the least squares curve fitting algorithm. Then, points on the fitted partial trajectory curve are used as new sampling points, and a new trajectory curve continues to be fitted according to the least squares curve fitting algorithm until the target point is reached. In this way, the enclosed trajectory prediction is completed.

Refer to FIG. 4. In the first user interface (the visualized data object is not shown), a movement trajectory r is an enclosed trajectory, and a selection region of the enclosed trajectory is a region R; and a movement trajectory q1 is not an enclosed trajectory, and a trajectory q2 is obtained through prediction, where q1 and q2 jointly form an enclosed trajectory, and a selection region of the enclosed trajectory is a region Q.

(3) Select the first visualized data object from the at least one visualized data object based on the enclosed selection region.

In some embodiments, some or all visualized data objects in the enclosed selection region are determined from the at least one visualized data object based on a location of the at least one visualized data object in the first user interface, to obtain candidate visualized data objects; and the first visualized data object is determined based on a contour location of the enclosed selection region and threshold regions of the candidate visualized data objects.

In some embodiments, for any visualized data object in the candidate visualized data objects, if it is determined, based on the contour location of the enclosed selection region and a threshold region of the visualized data object, that a contour of the enclosed selection region passes through all threshold regions of the visualized data object, it is determined that the visualized data object is in a selected state; and whether another visualized data object in the candidate visualized data objects is in the selected state is determined in the same manner. Then, all visualized data objects in the selected state in the candidate visualized data objects are used as first visualized data objects, that is, the first visualized data object includes one or more visualized data objects in the selected state.

The threshold region is preset, and the threshold region may be adjusted based on an actual application requirement. This is not limited in embodiments of this application. For example, each vertex of an outer contour of the visualized data object corresponds to one threshold region; or a plurality of orientations of the visualized data object each correspond to one threshold region, and the plurality of orientations include at least two of upper, lower, left, right, upper left, upper right, lower left, and lower right.

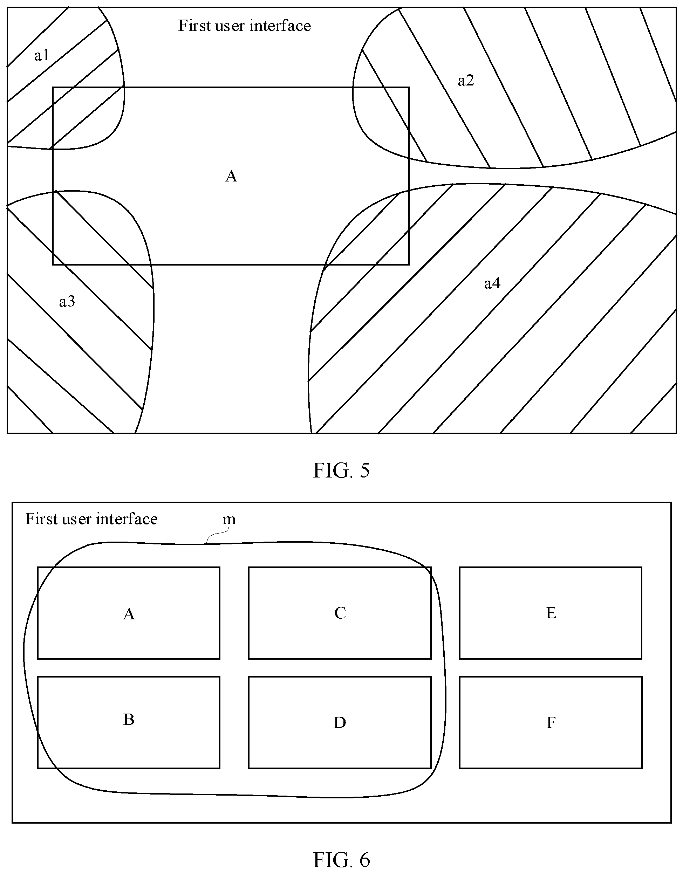

For example, refer to FIG. 5. In the first user interface, the upper left, the lower left, the upper right, and the lower right of a visualized data object A respectively correspond to threshold regions a1, a2, a3, and a4. Refer to FIG. 6. A visualized data object A in FIG. 6 and the visualized data object A in FIG. 5 are a same visualized data object. In the first user interface, visualized data objects A, B, C, and D are all candidate visualized data objects, and visualized data objects E and F are not candidate visualized objects. It is assumed that locations of threshold regions of the visualized data objects B, C, and D relative to the visualized data objects B, C, and D are the same as locations of the threshold regions of the visualized data object A relative to the visualized data object A, m is a contour of an enclosed selection region, and m passes through all threshold regions of the four visualized data objects A, B, C, and D. Therefore, the four visualized data objects are all set to the selected state.

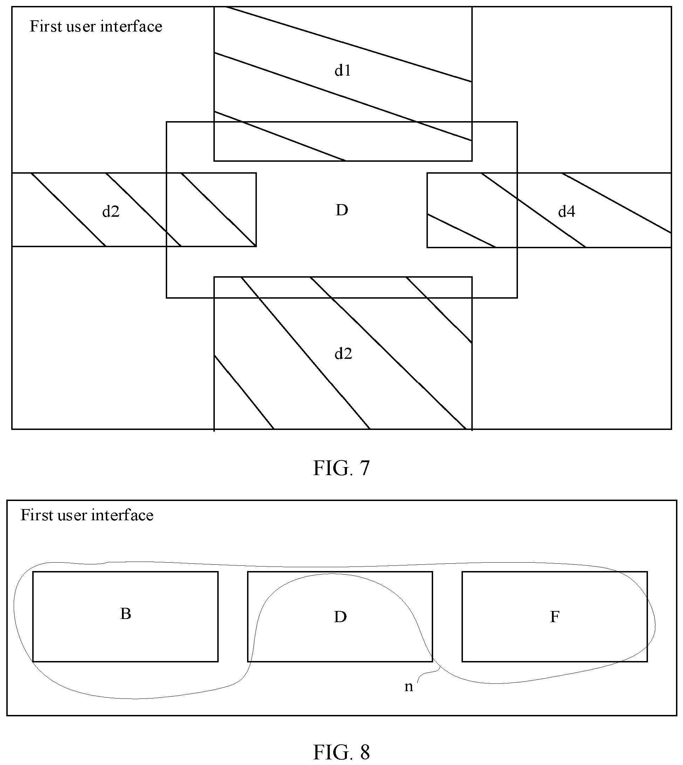

For example, refer to FIG. 7. In the first user interface, the upper, the lower, the left, and the right of a visualized data object D respectively correspond to threshold regions d1, d2, d3, and d4. Refer to FIG. 8. A visualized data object D in FIG. 8 and the visualized data object D in FIG. 7 are a same visualized data object. In the first user interface, the visualized data objects B, D, and F are all candidate visualized data objects. It is assumed that locations of threshold regions of the visualized data objects B and F relative to the visualized data objects B and F are the same as locations of the threshold regions of the visualized data object D relative to the visualized data object D, n is a contour of an enclosed selection region, and n passes through all threshold regions of the two visualized data objects B and F, and passes through only three threshold regions of the visualized data object D. Therefore, the two visualized data objects B and F are set to the selected state.

The foregoing describes an implementation of selecting the first visualized data object from the at least one visualized data object based on the enclosed selection region. During actual application, the first visualized data object may be selected based on the enclosed selection region in another implementation. For example, a visualized data object whose area proportion reaches a threshold proportion is determined from the at least one visualized data object based on the location of the at least one visualized data object in the first user interface. The area proportion is a proportion of a first area to a second area, the first area is an area that is in a region in which the visualized data object is located in the enclosed selection region, and the second area is a total area of the region in which the visualized data object is located. The visualized data object whose area proportion reaches the threshold proportion in the at least one visualized data object is set to the selected state; and all visualized data objects in the selected state in the at least one visualized data object are used as the first visualized data object, that is, the first visualized data object includes one or more visualized data objects in the selected state.

The threshold proportion is preset, ranges from 0 and 1, and is usually greater than 0.5. Certainly, a specific value of the threshold proportion may be adjusted based on an actual application requirement. This is not limited in embodiments of this application.

The foregoing steps (1) to (3) describe a manner of selecting the first visualized data object from the at least one visualized data object. Certainly, the first visualized data object may alternatively be selected from the at least one visualized data object in another manner. For example, in some other embodiments, in response to a check operation triggered by the user in the first user interface, a checked visualized data object is set to the selected state, and all visualized data objects in the selected state are used as the first visualized data object.

In an example, when it is detected that the user clicks a visualized data object in the first user interface through mouse selection or in another manner, the visualized data object is checked.

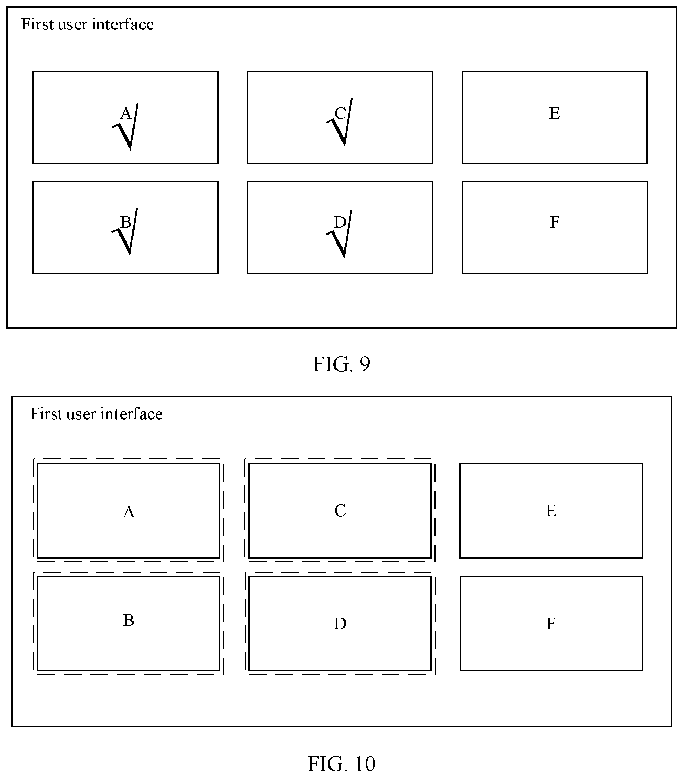

In some embodiments, in response to the check operation triggered in the first user interface, a check mark is displayed on the visualized data object checked in the first user interface. For example, as shown in FIG. 9, A, B, C, and D are all checked visualized data objects, "√" displayed on each of the four visualized data objects is the check mark, E and F are unchecked and unselected visualized data objects, and no check mark is displayed on the two visualized data objects.

In some embodiments, after all visualized data objects in the selected state are determined, in response to an adjustment operation, one or more visualized data objects are set from the selected state to an unselected state, or are set from an unselected state to the selected state; and all the visualized data objects in the selected state are used as the first visualized data object.

In an example, when it is detected that the user clicks, in the first user interface, a visualized data object in the selected state through mouse selection or in another manner, the visualized data object is set from the selected state to the unselected state; and when it is detected that the user clicks, in the first user interface, a visualized data object in the unselected state through mouse selection or in another manner, the visualized data object is set from the unselected state to the selected state.

In some embodiments, after the first visualized data object is selected from the at least one visualized data object, a selection box of the first visualized data object is displayed in the first user interface. For example, refer to FIG. 10. Each of A, B, C, and D is the first visualized data object, and a dashed box around each of A, B, C, and D is a selection box.

Based on the foregoing descriptions, an object selected operation triggered by the user may be implemented in a plurality of manners, so that the user can select a visualized data object that needs to be transformed in the first user interface, thereby bringing comfortable and convenient interaction experience to the user.

**Step 302:** Perform display conversion on the first visualized data object based on a transformation type obtained from a second user interface, to obtain a second visualized data object, where a display style of the second visualized data object matches the transformation type obtained from the second user interface.

Before display conversion is performed on the first visualized data object based on the transformation type obtained from the second user interface, the transformation type may be further obtained from the second user interface.

In some embodiments, the second user interface is an artificial intelligence (Artificial Intelligence, AI) panel displayed on the lower right of the first visualized data object. Certainly, the second user interface may alternatively be displayed at another location, and may be in a form of an application window or the like. A display location, a size, a form, and the like of the second user interface are not limited in embodiments of this application.

In some embodiments, a first text is displayed in the second user interface, and the first text describes a purpose of the second user interface. The first text may be "Transformation type selection panel" or the like. Specific content of the first text is not limited in embodiments of this application.

Based on the foregoing descriptions, in this embodiment of this application, at least two visualized data objects may be merged into one visualized data object, or one visualized data object may be split into at least two visualized data objects, or a display style of a visualized data object may be changed. In different cases, manners of obtaining the transformation type from the second user interface may also be different. The following uses three cases as examples for illustration.

**In a first case,** the second user interface includes a plurality of transformation options. In this case, a target transformation option selected by the user is obtained based on the plurality of transformation options included in the second user interface; and a type corresponding to the target transformation option is used as the transformation type obtained from the second user interface.

The target transformation option is any one of the plurality of transformation options, the plurality of transformation options indicate to change a display style of a visualized data object and may change the display style to a plurality of different styles. For example, the style of the visualized data object is changed to a line chart, a pie chart, a sector chart, or the like.

In some embodiments, the second user interface includes a transformation menu, and the plurality of transformation options are located in the transformation menu.

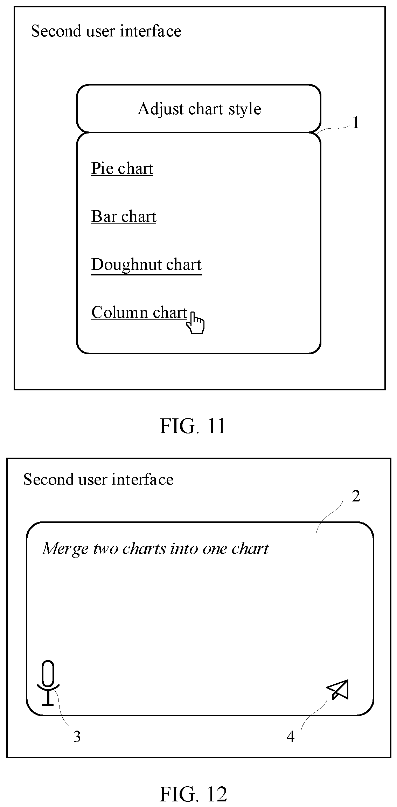

In some embodiments, a second text is displayed on the transformation menu, and the second text describes a purpose of the transformation menu. As shown in FIG. 11, the second text may be "Adjust chart style" or the like. Specific content of the second text is not limited in embodiments of this application. For example, refer to FIG. 11. The second user interface shown in FIG. 11 includes a transformation menu 1, and a text "Adjust chart style" is displayed on the transformation menu 1. The transformation menu 1 includes a plurality of transformation options that are a pie chart, a bar chart, a doughnut chart, and a column chart respectively. The user selects the "column chart" option as the target transformation option. In this case, the transformation type obtained from the second user interface is to transform a current style of the first visualized data object into a column chart.

In some embodiments, before the target transformation option selected by the user is obtained, the plurality of transformation options that match the display style of the first visualized data object may be further obtained based on a display style of the first visualized data object, where the plurality of transformation options and the display style of the first visualized data object are output for display in a manner of a style conversion relationship.

The style conversion relationship usually includes styles between which a visualized data object can be converted to each other. In this way, after the first visualized data object is selected, styles to which the first visualized data object can be converted may be determined based on the current style of the first visualized data object and the style conversion relationship, and transformation options corresponding to these styles are used as the plurality of transformation options included in the second user interface.

Based on the foregoing descriptions, the first visualized data object may be generated by the first application, or may not be generated by the first application. If the first visualized data object is generated by the first application, the first application has learned of the current style of the first visualized data object; or if the first visualized data object is not generated by the first application, the server needs to be invoked to determine the current style of the first visualized data object by using the image recognition technology.

In some embodiments, when determining the current style of the first visualized data object by using the image recognition technology, the server may obtain an image of the first visualized data object; perform feature extraction on the image of the first visualized data object; and classify the first visualized data object based on an extracted feature by using a classifier, to determine the current style of the first visualized data object. Alternatively, the image of the first visualized data object may be directly input into the classifier, and the current style of the first visualized data object is determined by using the classifier.

Before feature extraction is performed on the image of the first visualized data object, preprocessing may be further performed on the image of the first visualized data object. The preprocessing includes but is not limited to operations such as smoothing, transformation, enhancement, restoration, and filtering. The classifier is trained in advance, and a decision rule of the classifier is determined through training, so that an error rate is the lowest when the style of the visualized data object is classified according to the decision rule.

In the foregoing first case, a current transformation requirement of the first visualized data object is a style change, and the first visualized data object may include one visualized data object, or may include a plurality of visualized data objects. Current styles of the plurality of visualized data objects may be the same or may be different. When current styles of the plurality of visualized data objects are different, the plurality of transformation options may be an intersection of some candidate styles that can be transformed from the current styles of the plurality of visualized data objects.

**In a second case,** the second user interface includes an input box, and the input box indicates to describe a transformation type by using natural language. In this case, a transformation type input by the user is obtained from the input box in the second user interface, and the transformation type input by the user is used as the transformation type obtained from the second interface.

In some embodiments, the user may input, into the input box through keyboard input or in another manner, a text for describing the transformation type.

In some other embodiments, the input box includes a voice input option, and the user may describe a transformation type through voice input by using the voice input option. In this case, when detecting a voice input operation triggered by the user, the client obtains voice content, converts the voice content into a text form, and displays the text form in the input box.

In some embodiments, when obtaining, from the input box in the second user interface, the transformation type input by the user, the client may directly extract the corresponding transformation type from a text in the input box. Certainly, the client may alternatively send a text in the input box to the server, and the server extracts the corresponding transformation type from the text. Regardless of whether extraction is performed by the client or the server, when the corresponding transformation type is extracted from the text in the input box, text content in the text may be recognized by using a text recognition technology; and the transformation type corresponding to the text in the input box is extracted by analyzing a syntax and searching for keywords such as a quantity (one, two, or the like), a style (a sector chart, a line chart, or the like), and a connection verb (splitting into, merging into, converting into, changing into, or the like). For example, the text in the input box is: Now merge two charts into one chart, and a merged chart is changed into a sector chart. The extracted corresponding transformation type is to merge the two charts into one sector chart.

In some embodiments, when detecting an input confirmation operation triggered by the user, the client obtains, from the second user interface, the transformation type input by the user. A manner in which the user triggers the confirmation operation may be pressing an Enter key, or may be clicking a confirmation key when the input box includes the confirmation key, or may be another manner. This is not limited in embodiments of this application.

In some other embodiments, when detecting that the text displayed in the input box is not updated within first duration, the client obtains, from the second user interface, the transformation type input by the user. The first duration may be preset by the client, or may be set by the user. A value of the first duration may be set based on an actual application requirement. A setting manner and a value of the first duration are not limited in embodiments of this application.

For example, refer to FIG. 12. The second user interface shown in FIG. 12 includes an input box 2. The user may directly input a text in the input box, or may describe a transformation type using a voice input option 3 through voice input by using natural language. The text in the input box 2 "Merge two charts into one chart" is the transformation type input by the user. After completing the input, the user clicks a confirmation key 4 to trigger an input confirmation operation, and then the client or the server recognizes text content in the input box by using the text recognition technology, to extract the corresponding transformation type.

It should be noted that, in the foregoing second case, the transformation type obtained from the second user interface may be a style change, or may be content splitting or merging. This is not limited in embodiments of this application.

**In a third case,** the second user interface includes at least one predicted transformation option. In this case, a target predicted transformation option selected by the user is obtained based on the at least one predicted transformation option included in the second user interface, where the target predicted transformation option is any one of the at least one predicted transformation option; and a type corresponding to the target predicted transformation option is used as the transformation type obtained from the second user interface.

The predicted transformation option is obtained by predicting the transformation type. A manner of predicting the transformation type may be: when various operation information of the user is collected, invoking the server, and analyzing a previous transformation requirement of the user by using a big data model, to obtain a preference of the transformation type determined for the first visualized data object after the user selects the first visualized data object with different quantities and styles, and obtaining the at least one predicted transformation option based on the preference.

In some embodiments, the client re-predicts the transformation type when detecting a re-prediction operation triggered by the user.

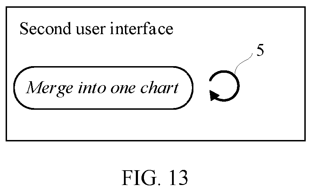

For example, refer to FIG. 13. The second user interface shown in FIG. 13 includes a predicted transformation option, that is, merge into one chart. The user may click an icon 5 on the left of the predicted transformation option to trigger the re-prediction operation, and the server regenerates a predicted transformation option.

It should be noted that, in the foregoing third case, the transformation type obtained from the second user interface may be a style change, or may be content splitting or merging. This is not limited in embodiments of this application.

In addition, the second user interface may further include at least two of the transformation menu, the input box, and the at least one predicted transformation option. In this way, the user may express a selected transformation type in any manner, which is easy to operate and improves efficiency.

Based on the foregoing descriptions, in this embodiment of this application, at least two visualized data objects may be merged into one visualized data object, or one visualized data object may be split into at least two visualized data objects, or a style of a visualized data object may be changed. When transformation types are different, manners of performing display conversion on the first visualized data object may also be different. The following also uses three cases as examples for illustration.

**In a first case,** the first visualized data object includes at least two visualized data objects, and the transformation type obtained from the second user interface indicates to perform content merging on the at least two visualized data objects. In this case, datasets respectively corresponding to the at least two visualized data objects are obtained; and content merging is performed on the at least two visualized data objects based on the datasets corresponding to the at least two visualized data objects and the transformation type obtained from the second user interface, to obtain the second visualized data object.

In some embodiments, the datasets and current display styles that correspond to the at least two visualized data objects are obtained. If the obtained datasets corresponding to the at least two visualized data objects are in a progressive relationship (for example, a dataset of one visualized data object is a business turnover from January to March, and a dataset of the other visualized data object is a business turnover from April to June. In this case, the two datasets are in the progressive relationship), one visualized data object is generated by merging the datasets corresponding to the at least two visualized data objects based on a third style, where the third style is any one of the styles of the at least two visualized data objects. If the obtained datasets corresponding to the at least two visualized data objects are not in the progressive relationship, the at least two visualized data objects are directly merged based on the current styles.

For a manner of obtaining the datasets and the current display styles that correspond to the at least two visualized data objects, refer to related descriptions in step 301. Details are not described herein again.

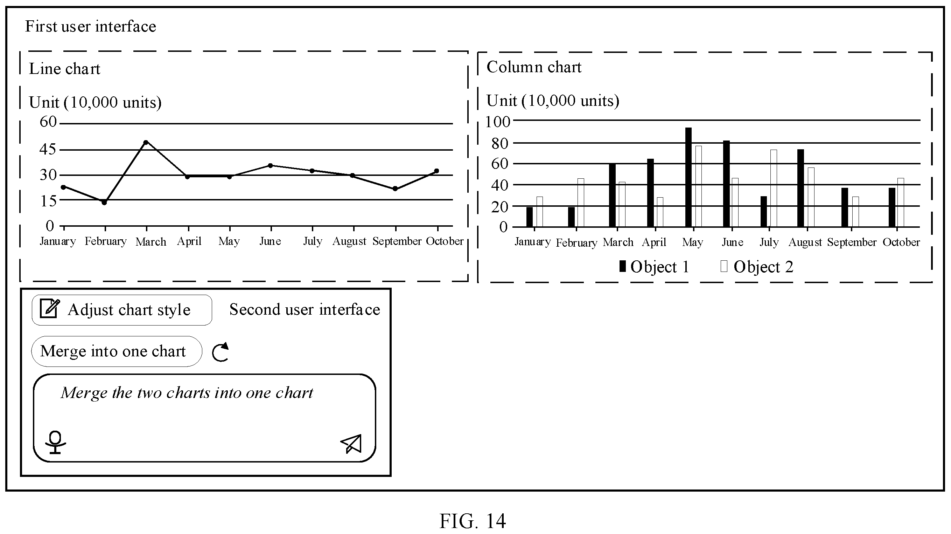

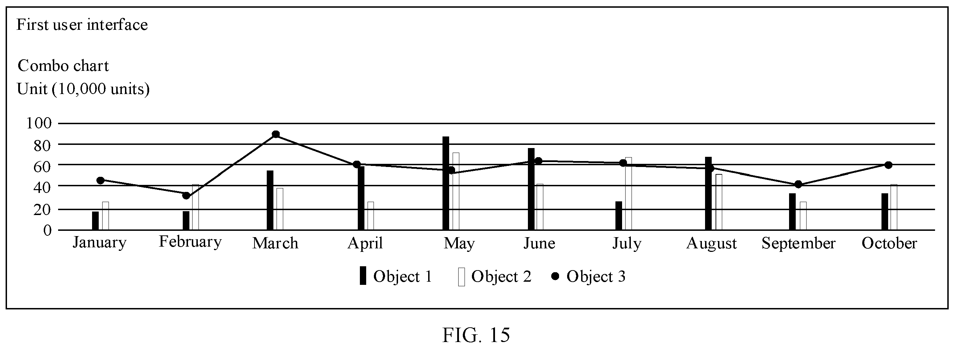

For example, refer to FIG. 14. First visualized data objects included in FIG. 14 are a line chart and a column chart, and a transformation type described by the user in the input box shown in FIG. 12 is to merge the two charts into one chart, that is, the transformation type is content merging. Datasets and styles that correspond to the two visualized data objects are obtained. A style of a visualized data object on the left is the line chart, and a style of a visualized data object on the right is the column chart. Because the datasets of the two visualized data objects are not in a progressive relationship, the two visualized data objects are directly merged based on the current styles, to obtain a second visualized data object shown in FIG. 15, where a style of the second visualized data object is a combo chart.

**In a second case,** the first visualized data object includes one visualized data object, and the transformation type obtained from the second user interface indicates to perform content splitting on the one visualized data object. In this case, a dataset corresponding to the one visualized data object is obtained; and content splitting is performed on the one visualized data object based on the dataset corresponding to the one visualized data object and the transformation type obtained from the second user interface, to obtain the second visualized data object.

For a manner of obtaining the dataset corresponding to the one visualized data object, refer to related descriptions in step 301. Details are not described herein again.

In some embodiments, in addition to obtaining the dataset corresponding to the one visualized data object, a business requirement of the user is further obtained; the dataset corresponding to the visualized data object is divided based on a content splitting requirement and the business requirement of the user, to obtain a sub-dataset; and a corresponding visualized data object is generated based on each sub-dataset.

The business requirement of the user may be obtained by analyzing the visualized data object based on a name/title of the visualized data object, or may be directly informed by the user, or may be obtained in another manner. This is not limited in embodiments of this application.

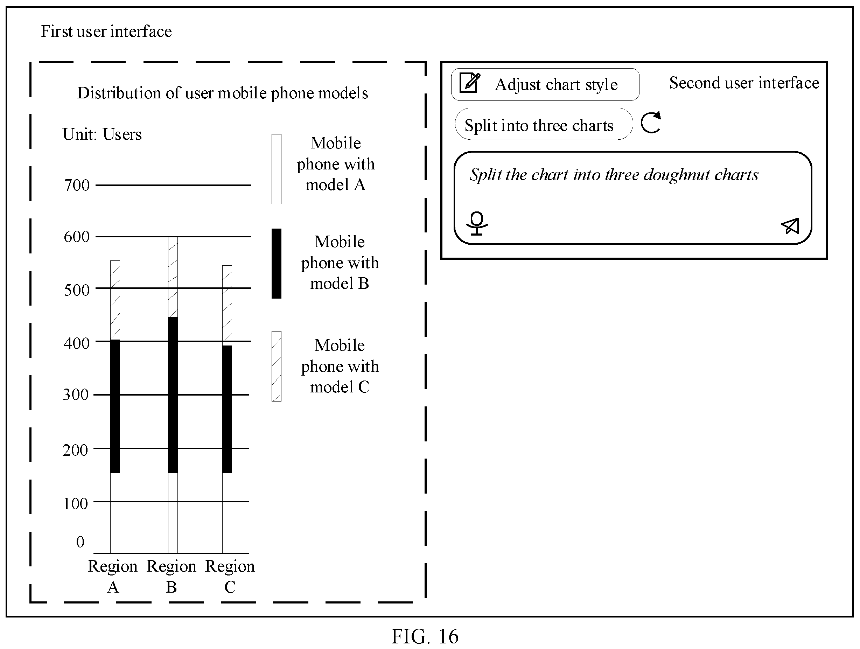

For example, refer to FIG. 16. A visualized data object shown in FIG. 16 is a column chart of distribution of user mobile phone models in three regions A, B, and C, and a title is distribution of user mobile phone models. The business requirement of the user is to obtain distribution of the user mobile phone models in the three regions A, B, and C. If the content splitting requirement is to split the chart into three charts, a dataset corresponding to the visualized data object shown in FIG. 16 is divided into three sub-datasets by the regions A, B, and C based on the business requirement of the user, and corresponding visualized data objects are respectively generated based on the three sub-datasets.

**In a third case,** the transformation type obtained from the second user interface indicates to perform a style change on the first visualized data object. In this case, a dataset corresponding to the first visualized data object is obtained; and the style change is performed on the first visualized data object based on the dataset corresponding to the first visualized data object and the transformation type obtained from the second user interface, to obtain the second visualized data object.

In some embodiments, the dataset corresponding to the first visualized data object is obtained, and a visualized data object is generated based on a correspondence between a first style and a second style, the obtained dataset, and the second style, so that the second visualized data object can be obtained. The first style is a current style of the first visualized data object, and the second style is a style indicated by the transformation type obtained from the second user interface.

For a manner of obtaining the dataset corresponding to the first visualized data object, refer to related descriptions in step 301. Details are not described herein again.

Because both the first style and the second style are statistical charts, the correspondence between the first style and the second style usually includes a correspondence between the two statistical charts, for example, between a column chart and a line chart, or a horizontal coordinate axis and a vertical coordinate axis correspond to each other and are consistent.

During actual application, a combination of the foregoing three cases often occurs. That is, the transformation type obtained from the second user interface usually includes at least two of content merging, content splitting, and a style change. For example, a transformation type is to split a line chart into three column charts. In this case, the transformation type indicates both content splitting and a style change.

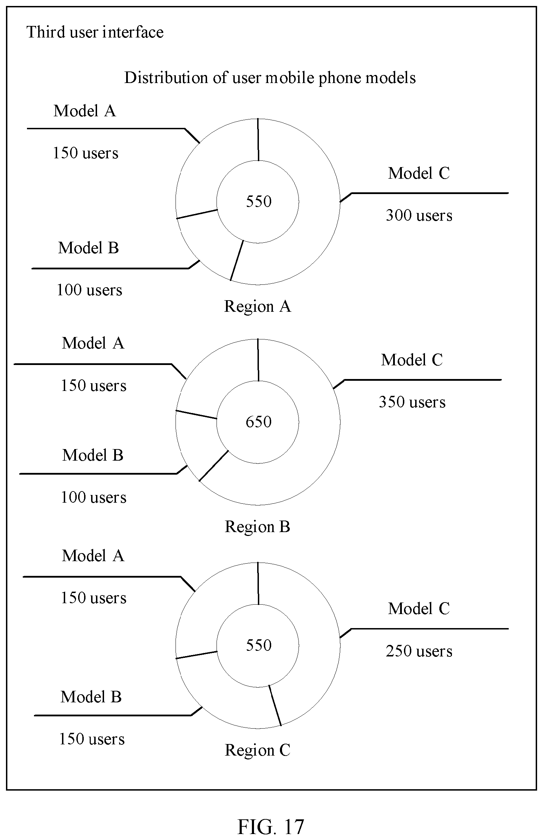

For example, refer to FIG. 16. A visualized data object shown in FIG. 16 is a column chart of distribution of user mobile phone modes in three regions A, B, and C, and a title is distribution of user mobile phone models. It can be learned from a text in an input box that a transformation type currently selected by the user is to split the chart into three doughnut charts. In this case, a dataset corresponding to the visualized data object shown in FIG. 16 is divided into three datasets by the regions A, B, and C based on the business requirement of the user. Then, a second visualized data object shown in FIG. 17 is generated based on a correspondence between the column chart and the doughnut charts.

Display conversion is performed on the selected visualized data object based on different transformation types by using the style conversion relationship, the big data model, the image recognition technology, and the like, so that a result can be obtained with a fast response, thereby helping improve work and learning efficiency of the user.

In some embodiments, when display conversion is performed on the first visualized data object, supplementary information of the first visualized data object is further obtained, and the supplementary information is added to the second visualized data object.

The supplementary information is information related to the business requirement of the user other than information displayed in the first visualized data object. For example, the business requirement of the user is to compare air quality in four regions on a day, and values of a plurality of air quality indicators of the four regions are displayed in the first visualized data object. In this case, the supplementary information of the first visualized data object may include thresholds of all levels for the air quality indicators, and values of other air quality indicators of the four regions other than the air quality indicators displayed in the first visualized data object.

The business requirement of the user may be obtained by analyzing the visualized data object based on a name/title of the visualized data object, or may be directly informed by the user, or may be obtained in another manner. This is not limited in embodiments of this application. There are also a plurality of manners of obtaining the supplementary information of the first visualized data object. For example, if the user may directly notify the client of the supplementary information through a dialog chat, information import, or the like, the supplementary information may be directly obtained. If the first visualized data object is in one page of report imported by the user, information that matches content in the first visualized data object in the report may be searched for, to obtain the supplementary information. Alternatively, the supplementary information may be obtained by the server from a network knowledge base based on the business requirement of the user. Certainly, in different cases, the supplementary information may be obtained in another manner. This is not limited in embodiments of this application.

The supplementary information of the first visualized data object is obtained in a plurality of manners, and the supplementary information is added to the second visualized data object, so that the business requirement of the user is further met, thereby improving user experience.

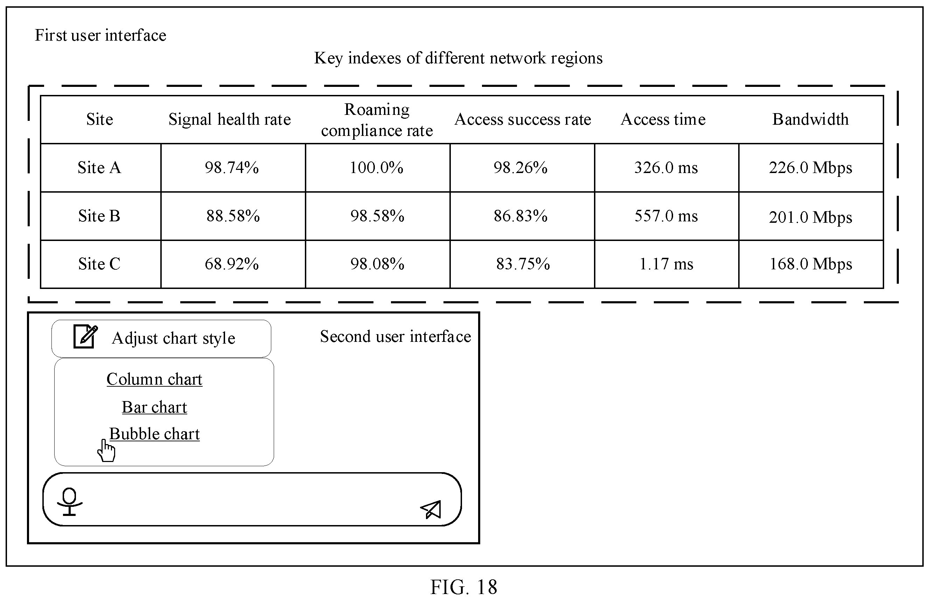

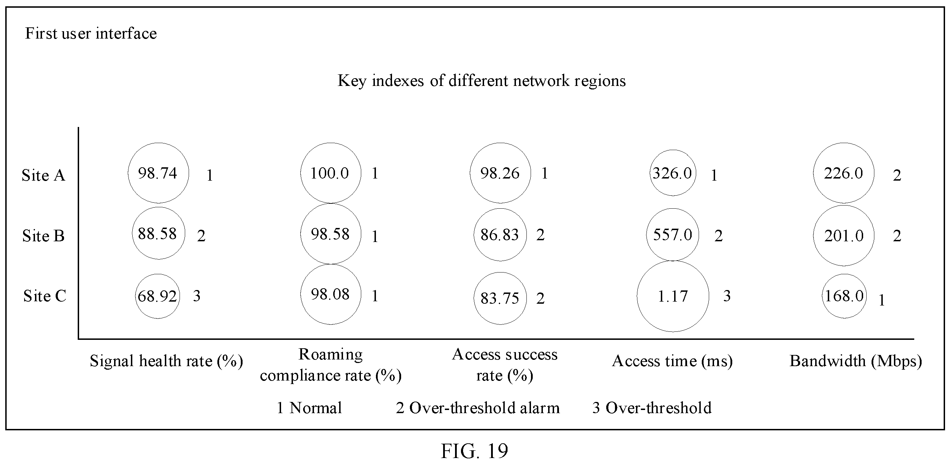

For example, refer to FIG. 18. It is assumed that FIG. 18 is a one page of report imported by the user, network quality of three sites A, B, and C is analyzed in the report, and a table shows different network key indicators of the three sites. The table is the first visualized data object, and a target transformation option selected by the user in a transformation menu is a bubble chart. The server may learn, through analysis, that data in the first visualized data object is all network key indicators, and there are usually thresholds of various levels for the network key indicators. In this case, the server searches the network knowledge base for the thresholds of various levels for the network key indicators included in the first visualized data object, adds the information to the second visualized data object, and distinguishes different levels by using identifiers 1, 2, and 3 on right sides of bubbles, to obtain a second visualized data object shown in FIG. 19.

**Step 303:** Display the second visualized data object.

The second visualized data object may be displayed at a location of the first visualized data object in the first user interface, and cover the first visualized data object, as shown in FIG. 19, or the second visualized data object may be displayed in the first user interface together with the first visualized data object. Certainly, the second visualized data object may alternatively be displayed in a third user interface other than the first user interface and the second user interface, as shown in FIG. 17. This is not limited in embodiments of this application.

The foregoing describes a plurality of implementations of selecting the first visualized data object from the at least one visualized data object included in the first user interface. In some other embodiments, the first user interface may further include a session region, the session region includes a session panel, and the session panel includes a session box. In this case, the client may obtain a query statement input by the user in the session box, determine, from the at least one visualized data object, a visualized data object that matches the query statement, and use, as the first visualized data object, the visualized data object that matches the query statement. Alternatively, the session panel includes at least one predicted query option. In this case, the client may obtain a target predicted query option selected by the user on the session panel, determine, from the at least one visualized data object, a visualized data object corresponding to the target predicted query option, and use, as the first visualized data object, the visualized data object corresponding to the target predicted query option.

After the first visualized data object is determined, the first visualized data object may be further displayed in the session region. A manner in which the user inputs the query statement in the session box may be text input, voice input, or the like.

When the visualized data object corresponding to the query statement is determined, the server may analyze semantics of the query statement, and select, based on the semantics, the visualized data object corresponding to the semantics from the at least one visualized data object included in the first user interface.

In some embodiments, when displaying, in the session region, the visualized data object corresponding to the query statement, namely, the first visualized data object, the client may further display an intelligent reply statement in the session region. The intelligent reply statement is generated by the server by using a neural network model, a big data model, and the like, and the intelligent reply statement includes a statement that summarizes information content indicated by the first visualized data object, and the like.

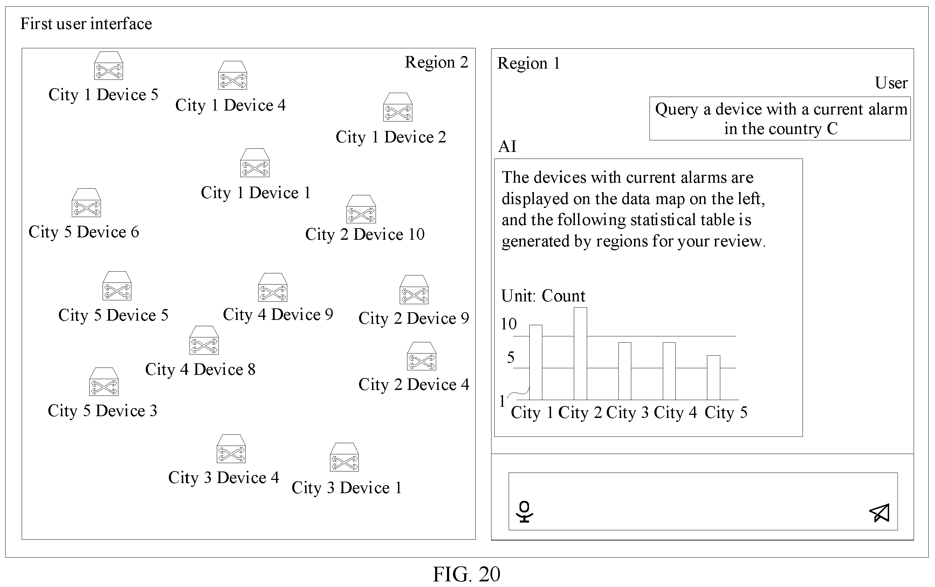

For example, refer to FIG. 20. In FIG. 20, a region 1 is a session region, the session region includes a session panel, and the session panel includes a session box. It can be learned from FIG. 20 that a query statement input by the user in the session box is "Query a device with a current alarm in the country C". In this case, the server may determine, from the at least one visualized data object based on the query statement, that a visualized data object that matches the query statement is a column chart (namely, the first visualized data object) in FIG. 20, and a text above the first visualized data object is the intelligent reply statement.

In some embodiments, the first visualized data object indicates statistical data of a plurality of regions, the first visualized data object includes a plurality of pieces of markable information, the markable information indicates a statistical indicator of the statistical data, the display style of the second visualized data object is a data map, the data map includes marker icons corresponding to the plurality of pieces of markable information, and the second visualized data object and the first visualized data object are displayed simultaneously. In this case, the client may further obtain, based on the plurality of pieces of markable information included in the first visualized data object, target markable information selected by the user; and on the data map, display, in a first display manner, a marker icon corresponding to the target markable information, and display, in a second display manner, a marker icon corresponding to markable information other than the target markable information.

When the first user interface includes the session region, after the first visualized data object is determined based on the query statement, the target predicted query option, or in another manner, if the first visualized data object indicates the statistical data of the plurality of regions, the data map corresponding to the first visualized data object may be displayed together with the first visualized data object.

The markable information indicates a statistical indicator of the statistical data in the first visualized data object. For example, the markable information may be a horizontal coordinate field, a comment field, or the like in the first visualized data object. During actual application, the markable information may be determined based on an actual situation of the first visualized data object. Each piece of markable information corresponds to a group of data content, and each group of data content is included in the dataset corresponding to the first visualized data object.

The marker icon may include content in various forms such as a graph and a text. A specific form of the marker icon is not limited in embodiments of this application.

For example, refer to FIG. 20. The region 1 in the first user interface is the session region, and the first visualized data object corresponding to the query statement input by the user is displayed, the second visualized data object is displayed in a region 2 on a left side, and the display style of the second visualized data object is a data map (which is only a partial view and not fully displayed in the figure). The first visualized data object is a column chart of quantities of devices with alarms in different cities in the country C. Horizontal coordinate fields in the first visualized data object are all markable information, for example, "City 1" and "City 2". Columns corresponding to the different cities in the first visualized data object are all also markable information, for example, a column 1 in the figure. A plurality of fields in the second visualized data object and graphs above the fields are all marker icons corresponding to the markable information in the first visualized data object. For example, a "City 4 Device 8" field, a "City 4 Device 9" field, and graphs above the two fields in the figure are marker icons corresponding to the markable information "City 4".

There are a plurality of manners of selecting the target markable information by the user. For example, when detecting a selection operation triggered by the user in the first visualized data object, the client uses, as the target markable information, markable information selected through the selected operation. The selection operation may be double-clicking a piece of markable information with a left button of the mouse, clicking a piece of markable information with a right button of the mouse, or the like. This is not limited in embodiments of this application.

The first display manner and the second display manner are two different display manners. For example, the first display manner is highlight display, and the second display manner is dimmed display. That is, the marker icon corresponding to the target markable information is displayed in a highlighted manner, and the marker icons corresponding to the remaining markable information is displayed in a dimmed manner. In other words, display brightness of the marker icon corresponding to the target markable information is high, and display brightness of the marker icon corresponding to the remaining markable information is low.

When the user selects one piece of markable information from the first visualized data object, a marker icon corresponding to the markable information and another marker icon are displayed in different display manners on the data map, so that the user can intuitively view a correspondence between each piece of markable information in the first visualized data object and a marker icon on the data map.

Further descriptions are provided based on the foregoing example. Refer to FIG. 20. If the client detects that the user double-clicks a "City 4" field in the first visualized data object with the mouse, the field is determined as the target markable information, and all fields including the "City 4" field in the second visualized data object and graphs above the fields are marker icons corresponding to the target markable information. In this case, these marker icons are displayed in a highlighted manner, and the remaining marker icons are displayed in a dimmed manner. In a current view, the "City 4 Device 8" and "City 4 Device 9" fields and the graphs above the two fields are displayed in a highlighted manner, and the remaining fields and graphs are displayed in a dimmed manner.

In some other embodiments, the client may further obtain, based on the marker icons included in the data map, a target marker icon selected by the user, display, in the first visualized data object in a first display manner, markable information corresponding to the target marker icon, and display, in a second display manner, markable information corresponding to a marker icon other than the target marker icon. That is, the first visualized data object and the data map can realize two-way linkage, so that the user intuitively views a correspondence between each piece of markable information in the first visualized data object and a marker icon on the data map.

Further descriptions are provided based on the foregoing example. Refer to FIG. 20. If the client detects that the user double-clicks a "City 1 Device 5" field in the second visualized data object with the mouse, the field and a graph above the field are determined as target marker icons, and a column 1 in the first visualized data object is markable information corresponding to the target marker icons. In this case, the column 1 in the first visualized data object is displayed in a highlighted manner, other markable information in the first visualized data object is displayed in a dimmed manner.

In some embodiments, the data map may be zoomed in/out. To be specific, in response to a zoom operation performed on the data map, a display scale of the data map resulting from the zoom operation is determined. If the display scale is less than a scale threshold, the marker icons corresponding to the plurality of pieces of markable information are aggregated and displayed on the data map by different regions based on the dataset corresponding to the first visualized data object. If the display scale is not less than the scale threshold, the marker icons corresponding to the plurality of pieces of markable information are expanded and displayed on the data map by different geographical locations in the plurality of regions based on the dataset corresponding to the first visualized data object. That is, when the display scale of the data map resulting from the zoom operation is large, marker icons in a same region may be aggregated and displayed, or when the display scale of the data map resulting from the zoom operation is small, marker icons at different geographical locations in a same region may be expanded and displayed.

The scale threshold may be preset by the first application or a plug-in constructed based on the method, or may be set by a user. A manner and a value of setting the scale threshold are not limited in embodiments of this application. The zoom operation may be triggered by scrolling a mouse wheel, or may be triggered in another manner. This is not limited in embodiments of this application.

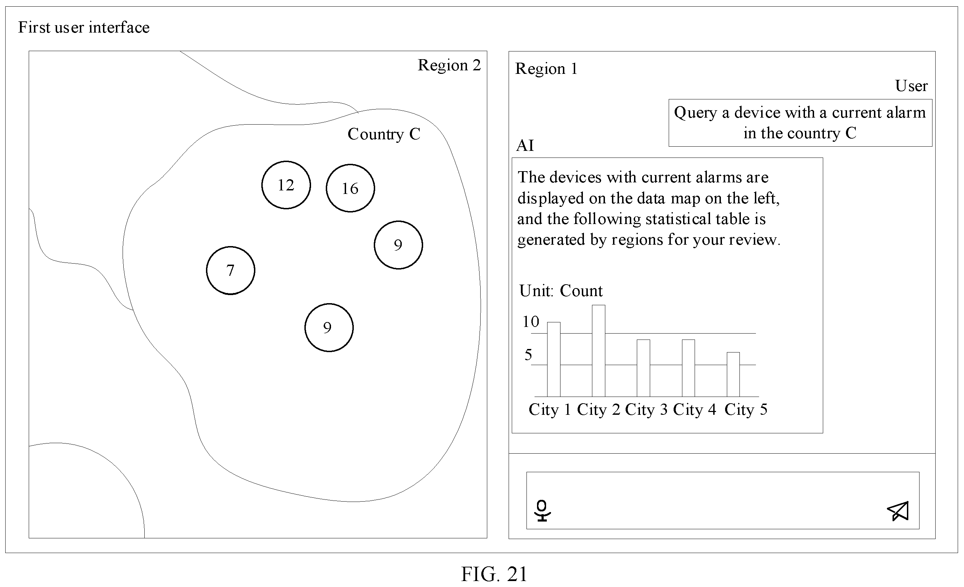

Further descriptions are provided based on the foregoing example. Refer to FIG. 20. A plurality of marker icons in the second visualized data object are in an expanded display state on the data map (only a part in the current view is displayed in the figure), and a location of each marker icon corresponds to an actual geographical location of a device represented by each marker icon. Refer to FIG. 21. A region 2 in FIG. 21 is still the second visualized data object in this example. A plurality of marker icons in the second visualized data object are in an aggregated display state on the data map, locations of different circles in the figure correspond to actual geographical locations of cities 1 to 5, and a number in each circle indicates a quantity of devices with alarms in the cities.

In some other embodiments, for each of the plurality of regions, the statistical data of the region includes data of a plurality of geographical locations, and the data of each geographical location further has a level. In this way, in the first visualized data object, different levels may be distinguished based on different colors (in this case, levels of different colors may also be used as markable information). Similarly, on the data map, different levels may also be distinguished based on different colors. That is, colors of the marker icons displayed on the data map may be different, and specifically depends on levels of corresponding data.

Generally, each region corresponds to one marker icon during aggregation and display, but each region includes a plurality of geographical locations. Therefore, in this case, when marker icons of a plurality of geographical locations in a same region are in the aggregated display state on the data map, a level corresponding to a largest amount of data in the plurality of geographical locations included in the region may be determined, and a color corresponding to the level is set to a color of the marker icons that are aggregated and displayed in the region.

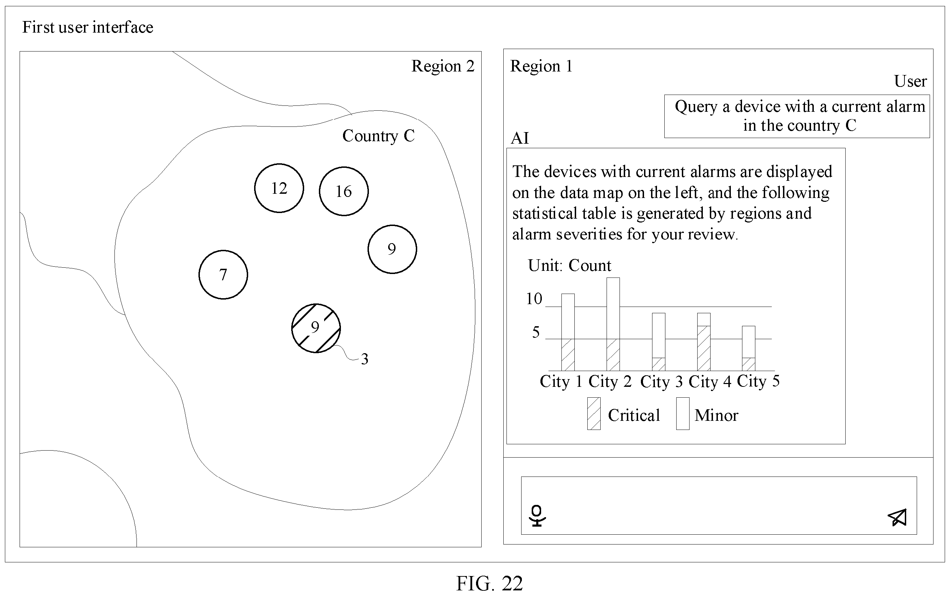

For example, refer to FIG. 22. The first visualized data object is displayed in a region 1 in the first user interface, the second visualized data object is displayed in a region 2 in the first user interface, and the display style of the second visualized data object is the data map. The first visualized data object is a column chart of quantities of devices with different alarms severities in different cities in the country C. In the figure, a stripe represents red, and no stripe represents yellow. Therefore, in the first visualized data object, red represents that an alarm severity is "critical", and yellow represents that an alarm severity is "minor". The plurality of marker icons in the second visualized data object are in the aggregated display state on the data map, and a circle 3 is a marker icon corresponding to the city 4. In the city 4, there are seven devices whose alarm severities are "critical", there are two devices whose alarm severities are "minor", and there are a largest quantity of devices whose alarm severities are "critical". Therefore, the circle 3 is displayed in red indicating that an alarm severity is "critical".

The following describes content about the session region and the data map again by using another example.

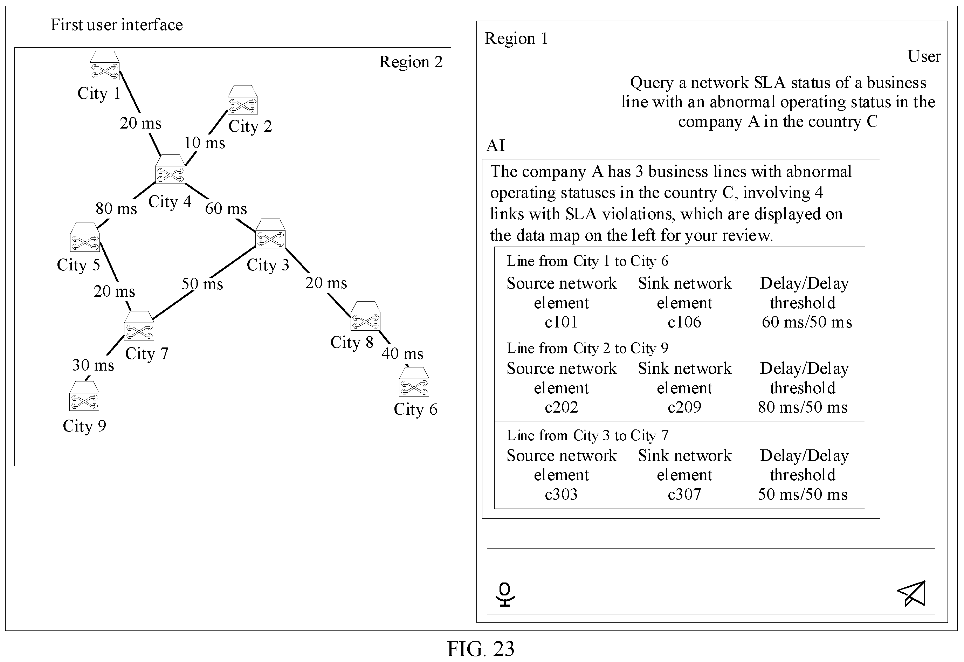

Refer to FIG. 23. A region 1 in the first user interface is a session region, a query statement input by the user is "Query a network SLA status of a business line with an abnormal operating status in the company A in the country C", a data table displayed in FIG. 23 is the first visualized data object, and a text above the first visualized data object is an intelligent reply statement. Because the first visualized data object indicates the statistical data of the plurality of regions, the data map corresponding to the first visualized data object, namely, the second visualized data object, is displayed simultaneously in a region 2 on a left side of the session region while the first visualized data object is displayed in the session region. The first visualized data object is a statistical table showing network service level agreement (service level agreement, SLA) statuses of three business lines with abnormal operating statuses in the company A in the country C. Network delay threshold crossing occurs in network SLA information of all business lines with abnormal operating statuses. The first visualized data object includes a source network element, a sink network element, a delay threshold, and a delay value corresponding to a link with a maximum network delay in each business line. In the first visualized data object, each row in the table is one piece of markable information. All network elements that the three business lines pass through and a network delay of each link included in each business line are displayed in the second visualized data object. When the client detects that the user double-clicks the first row in the table in the first visualized data object with the left button of the mouse, the first row in the table is used as the target markable information, and on the data map, "City 1", "City 4", "City 3", "City 8", and "City 6" fields, graphs above these fields, connection lines between these graphs, and numerical values on the connection lines are displayed in a highlighted manner, and the remaining fields and graphs are displayed in a dimmed manner.

Still refer to FIG. 23. It is assumed that different network delays correspond to abnormal statuses of different levels, a network delay greater than 50 ms corresponds to an abnormal status whose level is "very severe", a network delay ranging from 40 ms to 50 ms (including 40 ms and 50 ms) corresponds to an abnormal status whose level is "severe", a color corresponding to "very severe" is red, and a color corresponding to "severe" is yellow. In this case, in the first visualized data object, delay data "60 ms" in the first row and delay data "80 ms" in the second row are displayed in red, and delay data "50 ms" in the third row is displayed in yellow. In addition, in the second visualized data object, delay data whose value is greater than 50 ms and a line segment below the delay data are displayed in red, and delay data whose value ranges from 40 ms to 50 ms (including 40 ms and 50 ms) and a line segment below the delay data are displayed in yellow.

In some embodiments, the client may further obtain, from the plurality of marker icons included in the data map, a first marker icon selected by the user, and the server performs detailed analysis on the first marker icon to obtain more detailed information about the first marker icon. The obtained more detailed information is displayed in an interface in which the data map is located or another interface. A manner of obtaining the first marker icon is similar to the foregoing manner of obtaining the target markable information. Details are not described herein again.

The more detailed information may be various information related to the first marker icon. This is not limited in embodiments of this application. For example, for a data map on which network quality information of a plurality of network sites is displayed, the more detailed information may be a network fault diagnosis status of each network site, or may be a plurality of network indicators (such as bandwidth utilization and a download rate) of each network site, or may be other information related to network quality of a network site.

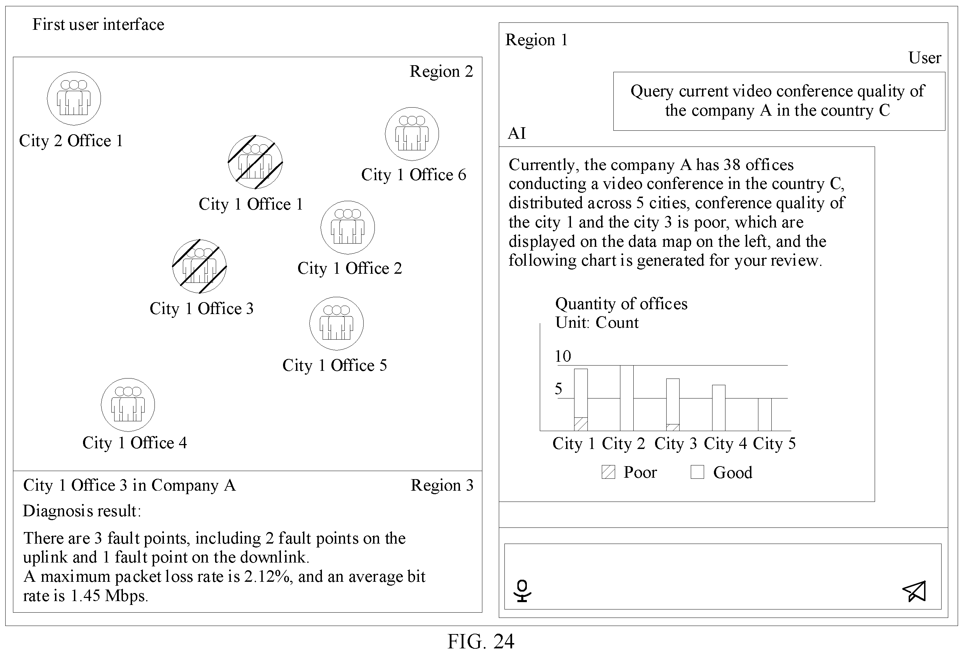

For example, refer to FIG. 24. A region 1 in the first user interface is a session region, a query statement input by the user is "Query current video conference quality of the company A in the country C", the first visualized data object is a column statistical chart in FIG. 24, a text above the first visualized data object is an intelligent reply statement, and the data map corresponding to the first visualized data object, namely, the second visualized data object, is displayed in a region 2 on a left side of the session region. The first visualized data object shows a quantity of offices whose video conference quality is "poor" and "good" in offices in which the company A is conducting a video conference in different cities. In the figure, a stripe represents red, and no stripe represents yellow. The second visualized data object displays a location of each office in which the video conference is being conducted and video conference quality (only a part in the current view is displayed in the figure), and each graph in the second visualized data object and a field below the graph may be used as the first marker icon selected by the user. It can be learned from the figure that video conference quality of an office 1 and an office 3 in a city 1 is poor. When detecting that the user clicks a "City 1 Office 3" field or a graph above the field with the right button of the mouse, the client invokes the server to diagnose a network of the office and displays a diagnosis result in a region 3 below the data map.

In conclusion, data content related to the regions is intuitively displayed on the map based on the data map, so that the user can directly obtain information; the user can view detailed data content or aggregate the data content through the zoom operation as required; the correspondence between each piece of markable information in the first visualized data object and the marker icon in the second visualized data object can be displayed in the highlighted manner by displaying the markable information in the first visualized data object and the marker icons on the data map in a linkage manner; and the first marker icon is analyzed in detail, so that the user can quickly obtain the more detailed information related to the first marker icon.

In embodiments of this application, the object selection operation triggered by the user may be implemented in a plurality of manners, so that the user selects, in the first user interface, a visualized data object that needs to be transformed. The first user interface may further include the session region, so that the user directly queries, through a session, a required visualized data object, thereby bringing comfortable and convenient interaction experience to the user. The second user interface may include at least two of the transformation option, the input box, and the predicted transformation option, so that the user can express a selected transformation type in a plurality of manners, to express a transformation requirement for a selected visualized data object, which is easy to operate and improves efficiency. Display transformation is performed on the selected visualized data object based on different transformation types by using the style conversion relationship, the big data model, the image recognition technology, and the like, so that a transformation result can be obtained with a fast response, thereby improving work and learning efficiency of the user. In addition, the supplementary information of the first visualized data object is obtained in a plurality of manners, and the supplementary information is added to the second visualized data object, so that the business requirement of the user is further met, thereby improving user experience. Furthermore, when the display style of the second visualized data object is the data map, the user may intuitively view data content corresponding to different regions, and may further view detailed data content or aggregate data content through the zoom operation as required. The marker icons on the data map and the markable information in the first visualized data object may be displayed in the linkage manner, so that the user intuitively views the correspondence between each piece of markable information in the first visualized data object and the marker icons on the data map.

In conclusion, in embodiments of this application, the visualized data object can be conveniently and quickly transformed, and the visualized data object can be flexibly displayed as required.

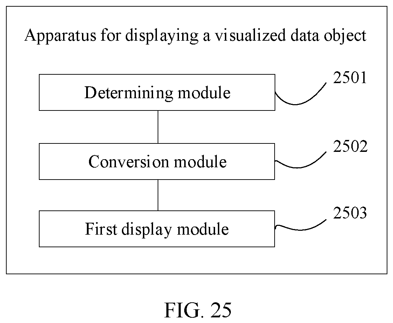

FIG. 25 is a diagram of a structure of an apparatus for displaying a visualized data object according to an embodiment of this application. Refer to FIG. 25. The apparatus includes a determining module 2501, a conversion module 2502, and a first display module 2503.

The determining module 2501 is configured to determine a first visualized data object from at least one visualized data object included in a first user interface. For a detailed implementation process, refer to content in step 301 in the embodiment shown in FIG. 3. Details are not described herein again.

The conversion module 2502 is configured to perform display conversion on the first visualized data object based on a transformation type obtained from a second user interface, to obtain a second visualized data object, where a display style of the second visualized data object matches the transformation type. For a detailed implementation process, refer to content in step 302 in the embodiment shown in FIG. 3. Details are not described herein again.

The first display module 2503 is configured to display the second visualized data object. For a detailed implementation process, refer to content in step 303 in the embodiment shown in FIG. 3. Details are not described herein again.

In a possible implementation, the determining module 2501 includes:
a trajectory determining submodule, configured to: in response to a movement operation triggered in the first user interface, determine a movement trajectory corresponding to the movement operation;
a region determining submodule, configured to determine an enclosed selection region based on the movement trajectory; and
an object selection submodule, configured to select the first visualized data object from the at least one visualized data object based on the enclosed selection region.

In a possible implementation, the apparatus further includes:
a second display module, configured to display a selection box of the first visualized data object.

In a possible implementation, the apparatus further includes:
a first obtaining module, configured to obtain, based on a plurality of transformation options included in the second user interface, a target transformation option selected by a user; and
a first type determining module, configured to use a type corresponding to the target transformation option as the transformation type obtained from the second user interface.

In a possible implementation, the apparatus further includes:
an option obtaining module, configured to obtain, based on a display style of the first visualized data object, the plurality of transformation options that match the display style of the first visualized data object, where the plurality of transformation options and the display style of the first visualized data object are output for display in a manner of a style conversion relationship.

In a possible implementation, the second user interface includes an input box, where the input box indicates to describe a transformation type by using natural language, and the apparatus further includes:
a second obtaining module, configured to obtain, from an input box in a second user interface, a transformation type input by a user; and
a second type determining module, configured to use the transformation type input by the user as the transformation type obtained from the second user interface.

In a possible implementation, the second user interface includes at least one predicted transformation option, and the apparatus further includes:
a third obtaining module, configured to obtain, based on the at least one predicted transformation option included in the second user interface, a target predicted transformation option selected by a user; and
a third type determining module, configured to use a type corresponding to the target predicted transformation option as the transformation type obtained from the second user interface.

In a possible implementation, the first visualized data object includes at least two visualized data objects, and the transformation type obtained from the second user interface indicates to perform content merging on the at least two visualized data objects. The conversion module 2502 is specifically configured to: obtain datasets respectively corresponding to the at least two visualized data objects; and perform content merging on the at least two visualized data objects based on the datasets corresponding to the at least two visualized data objects and the transformation type obtained from the second user interface, to obtain the second visualized data object.

In a possible implementation, the first visualized data object includes one visualized data object, and the transformation type obtained from the second user interface indicates to perform content splitting on the one visualized data object. The conversion module 2502 is specifically configured to: obtain a dataset corresponding to the one visualized data object; perform content splitting on the one visualized data object based on the dataset corresponding to the one visualized data object and the transformation type obtained from the second user interface, to obtain the second visualized data object.

In a possible implementation, the transformation type obtained from the second user interface indicates to perform a style change on the first visualized data object. The conversion module 2502 is specifically configured to: obtain a dataset corresponding to the first visualized data object; and perform the style change on the first visualized data object based on the dataset corresponding to the first visualized data object and the transformation type obtained from the second user interface, to obtain the second visualized data object.

In a possible implementation, the first visualized data object indicates statistical data of a plurality of regions, the first visualized data object includes a plurality of pieces of markable information, the markable information indicates a statistical indicator of the statistical data, the display style of the second visualized data object is a data map, the data map includes marker icons corresponding to the plurality of pieces of markable information, and the second visualized data object and the first visualized data object are displayed simultaneously. The apparatus further includes:
a fourth obtaining module, configured to obtain, based on the plurality of pieces of markable information included in the first visualized data object, target markable information selected by the user; and
an icon display module, configured to: on the data map, display, in a first display manner, a marker icon corresponding to the target markable information, and display, in a second display manner, a marker icon corresponding to markable information other than the target markable information.

In a possible implementation, the first visualized data object indicates statistical data of a plurality of regions, the first visualized data object includes a plurality of pieces of markable information, the markable information indicates a statistical indicator of the statistical data, the display style of the second visualized data object is a data map, the data map includes marker icons corresponding to the plurality of pieces of markable information, and the second visualized data object and the first visualized data object are displayed simultaneously. The apparatus further includes:
a fifth obtaining module, configured to obtain, based on the marker icons included in the data map, a target marker icon selected by the user; and
an information display module, configured to: in the first visualized data object, display, in a first display manner, markable information corresponding to the target marker icon, and display, in a second display manner, markable information corresponding to a marker icon other than the target marker icon.

In a possible implementation, the apparatus further includes:
a scale determining module, configured to: in response to a zoom operation performed on the data map, determine a display scale of the data map resulting from the zoom operation; and
an aggregation and display module, configured to: if the display scale is less than a scale threshold, aggregate and display, based on the dataset corresponding to the first visualized data object, the marker icons corresponding to the plurality of pieces of markable information on the data map by different regions; or
an expanded display module, configured to: if the display scale is not less than the scale threshold, expand and display, based on the dataset corresponding to the first visualized data object, the marker icons corresponding to the plurality of pieces of markable information on the data map by different geographical locations in the plurality of regions.

In a possible implementation, the display module 2503 is specifically configured to display the second visualized data object in the first user interface or a third user interface.

In embodiments of this application, the user may conveniently and quickly circle-select, in the first user interface, a visualized data object that needs to be transformed. The second user interface may include at least two of the transformation option, the input box, and the predicted transformation option, so that the user can express a selected transformation type in a plurality of manners, to express a transformation requirement for a selected visualized data object, which is easy to operate and improves efficiency. Display transformation is performed on the selected visualized data object based on different transformation types by using the style conversion relationship and the like, so that a transformation result can be obtained with a fast response, thereby improving work and learning efficiency of the user. Furthermore, when the display style of the second visualized data object is the data map, the user may intuitively view data content corresponding to different regions, and may further view detailed data content or aggregate data content through the zoom operation as required. The marker icons on the data map and the markable information in the first visualized data object may be displayed in the linkage manner, so that the user intuitively views the correspondence between each piece of markable information in the first visualized data object and the marker icons on the data map.

In conclusion, in embodiments of this application, the visualized data object can be conveniently and quickly transformed, and the visualized data object can be flexibly displayed as required.

It should be noted that when the apparatus for displaying the visualized data object provided in the foregoing embodiment displays the visualized data object, division into the foregoing functional modules is merely used as an example for description. During actual application, the foregoing functions may be allocated to different functional modules for implementation as required. In other words, the apparatus is divided into different functional modules in terms of an inner structure, to implement all or some of the functions described above. In addition, the apparatus for displaying the visualized data object provided in the foregoing embodiment and the method for displaying a visualized data object in the embodiment belong to a same concept. For a specific implementation procedure of the apparatus for displaying the visualized data object, refer to the method embodiment. Details are not described herein again.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like. It should be noted that the computer-readable storage medium mentioned in embodiments of this application may be a non-volatile storage medium, in other words, may be a non-transitory storage medium.

It should be understood that "a plurality of" in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and collection, use, and processing of related data need to conform to related laws, regulations, and standards of related countries and regions.

The foregoing descriptions are merely example embodiments of this application, but are not intended to limit this application. Any modification, equivalent replacement, improvement, or the like made without departing from the spirit and principle of this application shall fall within the protection scope of this application.

## Claims

1. A method for displaying a visualized data object, wherein the method comprises:
determining a first visualized data object from at least one visualized data object comprised in a first user interface;
performing display conversion on the first visualized data object based on a transformation type obtained from a second user interface, to obtain a second visualized data object, wherein a display style of the second visualized data object matches the transformation type; and
displaying the second visualized data object.

2. The method according to claim 1, wherein the determining the first visualized data object from the at least one visualized data object comprised in the first user interface comprises:
in response to a movement operation triggered in the first user interface, determining a movement trajectory corresponding to the movement operation;
determining an enclosed selection region based on the movement trajectory; and
selecting the first visualized data object from the at least one visualized data object based on the enclosed selection region.

3. The method according to claim 1 or 2, wherein after the determining the first visualized data object from the at least one visualized data object comprised in the first user interface, the method further comprises:
displaying a selection box of the first visualized data object.

4. The method according to any one of claims 1 to 3, wherein the second user interface comprises a plurality of transformation options, and the method further comprises:
obtaining, based on the plurality of transformation options comprised in the second user interface, a target transformation option selected by a user; and
using a type corresponding to the target transformation option as the transformation type obtained from the second user interface.

5. The method according to claim 4, wherein before the obtaining the target transformation option selected by the user, the method further comprises:
obtaining, based on a display style of the first visualized data object, the plurality of transformation options that match the display style of the first visualized data object, wherein the plurality of transformation options and the display style of the first visualized data object are output for display in a manner of a style conversion relationship.

6. The method according to any one of claims 1 to 3, wherein the second user interface comprises an input box, the input box indicates to describe a transformation type by using natural language, and the method further comprises:
obtaining, from the input box in the second user interface, a transformation type input by a user; and
using the transformation type input by the user as the transformation type obtained from the second user interface.

7. The method according to any one of claims 1 to 3, wherein the second user interface comprises at least one predicted transformation option, and the method further comprises:
obtaining, based on the at least one predicted transformation option comprised in the second user interface, a target predicted transformation option selected by a user; and
using a type corresponding to the target predicted transformation option as the transformation type obtained from the second user interface.

8. The method according to any one of claims 1 to 7, wherein the first visualized data object comprises at least two visualized data objects, and the transformation type obtained from the second user interface indicates to perform content merging on the at least two visualized data objects; and
the performing display conversion on the first visualized data object based on the transformation type obtained from the second user interface, to obtain the second visualized data object comprises:
obtaining datasets respectively corresponding to the at least two visualized data objects; and
performing content merging on the at least two visualized data objects based on the datasets corresponding to the at least two visualized data objects and the transformation type obtained from the second user interface, to obtain the second visualized data object.

9. The method according to any one of claims 1 to 7, wherein the first visualized data object comprises one visualized data object, and the transformation type obtained from the second user interface indicates to perform content splitting on the one visualized data object; and
the performing display conversion on the first visualized data object based on the transformation type obtained from the second user interface, to obtain the second visualized data object comprises:
obtaining a dataset corresponding to the one visualized data object; and
performing content splitting on the one visualized data object based on the dataset corresponding to the one visualized data object and the transformation type obtained from the second user interface, to obtain the second visualized data object.

10. The method according to any one of claims 1 to 7, wherein the transformation type obtained from the second user interface indicates to perform a style change on the first visualized data object; and
the performing display conversion on the first visualized data object based on the transformation type obtained from the second user interface, to obtain the second visualized data object comprises:
obtaining a dataset corresponding to the first visualized data object; and
performing the style change on the first visualized data object based on the dataset corresponding to the first visualized data object and the transformation type obtained from the second user interface, to obtain the second visualized data object.

11. The method according to claim 10, wherein the first visualized data object indicates statistical data of a plurality of regions, the first visualized data object comprises a plurality of pieces of markable information, the markable information indicates a statistical indicator of the statistical data, the display style of the second visualized data object is a data map, the data map comprises marker icons corresponding to the plurality of pieces of markable information, and the second visualized data object and the first visualized data object are displayed simultaneously; and the method further comprises:
obtaining, based on the plurality of pieces of markable information comprised in the first visualized data object, target markable information selected by the user; and
on the data map, displaying, in a first display manner, a marker icon corresponding to the target markable information, and displaying, in a second display manner, a marker icon corresponding to markable information other than the target markable information.

12. The method according to claim 10, wherein the first visualized data object indicates statistical data of a plurality of regions, the first visualized data object comprises a plurality of pieces of markable information, the markable information indicates a statistical indicator of the statistical data, the display style of the second visualized data object is a data map, the data map comprises marker icons corresponding to the plurality of pieces of markable information, and the second visualized data object and the first visualized data object are displayed simultaneously; and the method further comprises:
obtaining, based on the marker icons comprised in the data map, a target marker icon selected by the user; and
in the first visualized data object, displaying, in a first display manner, markable information corresponding to the target marker icon, and displaying, in a second display manner, markable information corresponding to a marker icon other than the target marker icon.

13. The method according to claim 11 or 12, wherein the method further comprises:
in response to a zoom operation performed on the data map, determining a display scale of the data map resulting from the zoom operation; and
if the display scale is less than a scale threshold, aggregating and displaying, based on the dataset corresponding to the first visualized data object, the marker icons corresponding to the plurality of pieces of markable information on the data map by different regions; or
if the display scale is not less than the scale threshold, expanding and displaying, based on the dataset corresponding to the first visualized data object, the marker icons corresponding to the plurality of pieces of markable information on the data map by different geographical locations in the plurality of regions.

14. The method according to claim 1, wherein the displaying the second visualized data object comprises:
displaying the second visualized data object in the first user interface or a third user interface.

15. An apparatus for displaying a visualized data object, wherein the apparatus comprises a module configured to implement the method according to any one of claims 1 to 14.
